# EUROPÄISCHE PATENTSCHRIFT

(11) **EP 3 390 248 B1**
(45) Veröffentlichungstag und Bekanntmachung des Hinweises auf die Patenterteilung: **28.09.2022**
(21) Anmeldenummer: 17748798.0
(22) Anmeldetag: 07.08.2017
(51) Int. Cl.: B65G 23/08, H02K 1/27, H02K 7/11

(54) **MOTORBETRIEBENE FÖRDERROLLE MIT BUSSTEUERUNG**
MOTOR-DRIVEN CONVEYOR ROLLER WITH BUS CONTROL
ROULEAU DE TRANSPORT MOTORISÉ À COMMANDE PAR BUS

(30) Priorität: 05.08.2016 DE 102016114524; 26.10.2016 DE 102016120415
(43) Veröffentlichungstag der Anmeldung: 24.10.2018
(60) Teilanmeldung: 19218128.7
(73) Patentinhaber: Interroll Holding AG, 6592 Sant' Antonino (CH)
(72) Erfinder: HENZE, Herbert, San't Antonino (CH)
(74) Vertreter: Kohlhof, Stephan
(86) Internationale Anmeldenummer: PCT/EP2017/069978
(87) Internationale Veröffentlichungsnummer: WO 2018/024917

(56) Entgegenhaltungen:
- EP-A1- 2 477 917
- EP-A2- 0 953 524
- WO-A1-2010/142029
- WO-A1-2012/094690
- WO-A1-2012/175193
- WO-A1-2015/113121
- DE-A1-102011 004 802
- DE-A1-102011 053 145
- DE-T5-112014 002 218
- JP-A- H 092 631
- JP-A- 2009 240 077
- JP-A- 2011 088 733
- US-A1- 2004 173 440
- US-B1- 6 244 427

## Beschreibung

Die Erfindung betrifft eine motorbetriebene Förderrolle, umfassend ein Förderrollenrohr, das drehbar um ein Achselement gelagert ist, eine innerhalb des Förderrollenrohres angeordnete Antriebseinheit, die für eine Drehmomenterzeugung und Rotationsbewegung zwischen dem Achselement und dem Förderrollenrohr ausgebildet und mit dem Achselement und dem Förderrollenrohr mechanisch gekoppelt ist, eine von außerhalb des Förderrollenrohres zu der Antriebseinheit verlaufende Energieleitung, eine von außerhalb des Förderrollenrohres zu der Antriebseinheit verlaufende Datenleitung. Ein weiterer Aspekt der Erfindung ist ein Verfahren zum Betrieb einer solchen Förderrolle.

Motorbetriebene Förderrollen dieser Art werden in der Intralogistik in vielfältigen Anwendungsfällen eingesetzt, beispielsweise zur Förderung von Gepäck, Produkten, Paketen, Behältern, Paletten oder dergleichen in Logistikzentren, in der industriellen Fertigung, in Postverteilerzentren, der Gepäckabfertigung und dergleichen. Solche motorbetriebenen Förderrollen sind dabei regelmäßig in Förderstrecken größerer Förderanlagen eingesetzt und dienen dazu, das Fördergut zu bewegen. Die Förderrollen können mittels Treibriemen, Ketten und dergleichen mit benachbarten mitlaufenden Rollen gekoppelt sein und diese antreiben, um so eine einheitlich angesteuerte Förderzone zu definieren. Mehrere solcher Förderzonen können dann in der Förderstrecke hintereinander angeordnet werden, um das Fördergut entlang dieser Förderstrecke zu befördern. Motorbetriebene Förderrollen dieser Art werden auch als Motorrollen, Rollenantriebe und in anderer Weise bezeichnet. Eine motorbetriebene Förderrolle kann auch ein Trommelmotor sein, der beispielsweise zum Antrieb eines Förderbandes als endseitige Umlenkrolle eingesetzt ist oder in anderer Form eine Förderstrecke mit Förderband oder anders aufgebaute Förderstrecke antreibt.

Grundsätzlich ist ein Erfordernis an solche motorbetriebenen Förderrollen im Einsatz in Förderstrecken und Förderanwendungen, diese in einer Steuerung oder einer Regelung betreiben zu können, um das Fördergut in bestimmter Weise zu fördern. So ist beispielsweise eine staudrucklose Förderung, die sogenannte ZPA=Zero Pressure Akkumulation oder eine Förderung mit einem geringen Staudruck, die sogenannte LPA=Low Pressure Accumulation oftmals gewünscht, bei der auf der Förderstrecke befindliche Fördergüter nicht miteinander in Kontakt kommen bzw. nur mit geringem Staudruck gegeneinander in Kontakt kommen, sodass sich nicht durch aufsummierte Kontaktkräfte Beschädigungen an einem Fördergut ergeben können. Des Weiteren ist es bekannt, Fördergüter auf einer Förderstrecke im Einzelabzug oder im Blockabzug zu fördern, also die Förderung von Fördergütern solcherart zu betreiben, dass jeweils ein Fördergut weitergefördert wird und ein nachfolgendes Fördergut in die dadurch entstehende Lücke ebenfalls einzeln gefördert wird oder mehrere Fördergüter simultan unter Beibehaltung von deren Abstand zu fördern. Zum Zwecke dieser Regelung und Steuerung ist es bekannt, bestimmte Daten von der Förderstrecke zu erhalten, beispielsweise über einen Lichtschrankensensor, um über die Position eines Förderguts Informationen in eine Steuerung einspeisen zu können, weiterhin Steuerungsbefehle an eine motorbetriebene Förderrolle zu senden, um diese in Betrieb zu setzen oder zu stoppen oder um beispielsweise deren Drehzahl zu steuern. Unter Drehzahl ist hierbei die Anzahl der Umdrehungen pro Minute zu verstehen, wobei sich diese Drehzahl auf die Umdrehungen pro Minute des Motors oder die Umdrehungen pro Minute der Förderrolle beziehen können, die voneinander unterschiedlich sein können, wenn die Antriebseinheit ein Getriebe umfasst.

Neben diesen allgemeinen Steuerungs- und Regelungsanforderungen, die bestimmte Übertragungsmechanismen für den Ist-Zustand aus der Förderstrecke in eine Steuerungseinheit und für einen Soll-Zustand aus der Steuerungseinheit in die Motorrolle erforderlich machen, liegt eine weitere Anforderung an solche motorbetriebenen Förderrollen darin, dass es wünschenswert ist, den Betrieb einer solchen Förderstrecke mit einer hohen Zuverlässigkeit durchzuführen. Dies liegt darin begründet, dass es sich in den typischen intralogistischen Anwendungen regelmäßig um Förderanforderungen handelt, bei denen ein Ausfall der Förderstrecke gravierende Zeitverzögerungen und finanzielle Schäden nach sich zieht, die weit über den reinen finanziellen Einsatz für den Ersatz des die Störung auslösenden Bauteils hinausgehen. Darüber hinaus werden in Förderstrecken häufig eine Vielzahl solcher motorbetriebenen Förderrollen eingesetzt, die folglich technisch gleichartige Systeme in großer Anzahl darstellen, wobei jedoch bereits durch Ausfall einer einzigen motorbetriebenen Förderrolle die Funktion der gesamten Förderstrecke eingeschränkt oder vollständig unterbrochen ist. Es ist daher ein wichtiges Bestreben, die Zuverlässigkeit des Betriebs solcher Förderstrecken, in denen motorbetriebene Förderrollen eingesetzt werden, zu verbessern. DE 11 2014 002218 T5 offenbart eine Förderrole nach dem Oberbegriff des Anspruchs 1.

Ein Problem, das insofern bei Trommelmotoren besteht ist, dass eine nach außen führende Verkabelung beschädigt wird. Im Logistikbereich ist eine Vielzahl bewegter Güter und Fördereinheiten vorhanden. Bei einer Kollision mit einem Kabel das zur Versorgung des Trommelmotors dient, kann dieses leicht beschädigt werden, was dann einen Ausfall des Trommelmotors nach sich zieht und im schlimmsten Fall zu einem Stillstand der Förderanlage führt.

Diese Aufgaben werden erfindungsgemäß durch eine motorbetriebene Förderrolle nach Anspruch 1 gelöst.

Mit der erfindungsgemäß fortgebildeten Motorrolle wird eine verbesserte Möglichkeit des Datentransfers für Daten aus der motorbetriebenen Förderrolle heraus und in die motorbetriebene Förderrolle hinein bereitgestellt. Die erfindungsgemäß vorgesehene Busleitung als Datenleitung erlaubt es, große Datenmengen in kurzer Zeit zu übertragen und ermöglicht daher eine Echtzeitüberwachung zahlreicher Ist-Zustände der Motorrolle sowie eine Echtzeitübertragung von Soll-Zuständen in die Motorrolle, die ein hohes Datenvolumen pro Zeiteinheit erfordern. Die Datenübertragung per Busleitung ist insbesondere auch deshalb vorteilhaft, weil aufgrund des spezifischen Aufbaus einer motorbetriebenen Förderrolle die Übertragung der Daten häufig leitungsgebunden, also nicht drahtlos, durch ein als Hohlachse ausgeführtes Achselement erfolgt. Dies ist beispielsweise solcherart realisiert, dass das Achselement ortsfest in einem Rahmengestell befestigt ist und die motorbetriebene Förderrolle hierdurch an dem Rahmengestell montiert ist und eine Drehmomentabstützung erfährt. Die Datenleitung kann dadurch über das als Hohlachse ausgeführte Achselement von außen axial in das Förderrollenrohr hineingeführt werden, aus dem Achselement dann radial oder axial hinausgeführt werden, um an die Antriebseinheit, insbesondere an eine zur Antriebseinheit zugehörige Steuerungseinheit angeschlossen zu werden. Da neben der Datenleitung auch die Energieversorgung der Antriebseinheit auf dem gleichen Leitungsweg erfolgen muss, ist der zur Verfügung stehende Raum für diese Leitungen jedoch begrenzt und ermöglicht nicht die Datenübertragung mittels einer größeren Anzahl einzelner Datenleitungen. Der Einsatz einer Busleitung, die bei vielen Busprotokollen, wie beispielsweise dem vorzugsweise eingesetzten CAN-Busprotokoll mittels lediglich mit einem Leitungsdraht oder mit zwei Leitungsdrähten ausgeführt werden kann, ermöglicht trotz dieser begrenzten Anzahl an Leitungsdrähten eine hohe Datenübertragungsrate und die Möglichkeit, unterschiedliche Dateninformationen über die Busleitung zu übertragen und mittels der Busschnittstelle entsprechend auszulesen und zu interpretieren.

Die erfindungsgemäß bereitgestellte Busleitung ermöglicht darüber hinaus einen Datentransfer aus der Fördervorrichtung, in der die Förderrolle eingesetzt ist, an eine zentrale Fernsteuerungs- und Diagnoseeinheit. Hierdurch können Daten aus der Fördervorrichtung an einer entfernten Stelle betrachtet, überwacht und analysiert werden und hieraus Steuerungsparameter generiert und an die Fördervorrichtung bzw. Förderrolle gesendet werden.

Gemäß einer ersten bevorzugten Ausführungsform ist vorgesehen, dass die Busschnittstelle ausgebildet ist, um über die Busleitung Daten zu leiten, welche mechanische Ist-Betriebsdaten, insbesondere eine Drehzahl der Antriebseinheit und/oder des Förderrollenrohres, eine Drehposition der Antriebseinheit und/oder des Förderrollenrohres und/oder ein Drehmoment der Antriebseinheit, zeitliche Ist-Betriebsdaten, insbesondere Betriebsdauer und/oder Anschaltdauer, und/oder thermische Ist-Betriebsdaten, insbesondere einen Temperaturkennwert, einen zur Berechnung eines Temperaturwert dienenden Strom durch eine Spule der Antriebseinheit beschreiben. Gemäß dieser Ausführungsform ist die Busschnittstelle zur Leitung bestimmter Daten ausgebildet. Hierunter ist zu verstehen, dass die Busschnittstelle ausgebildet ist, um solche Daten sowohl hinsichtlich ihrer Struktur als auch hinsichtlich ihres Datenvolumens zu empfangen und diese als solche zu interpretieren. Die Busschnittstelle umfasst hierbei elektronische Schaltkreise, die solche Daten entsprechend erkennen und verarbeiten bzw. im Falle der Versendung erkennen und für die Versendung entsprechend aufarbeiten.

Erfindungsgemäß können zum einen mechanische Ist-Betriebsdaten geleitet werden. Bei diesen Ist-Betriebsdaten handelt es sich um Daten, welche den tatsächlichen Betriebszustand der motorbetriebenen Förderrolle beschreiben. Dies kann beispielsweise die aktuelle Drehzahl der Antriebseinheit oder des Förderrollenrohres sein, also die Anzahl an Umdrehungen pro Minute, die Antriebseinheit bzw. Förderrollenrohr ausführen. Weiterhin kann dies die Drehposition der Antriebseinheit oder des Förderrollenrohres sein. Hierunter ist die Winkelposition um die Drehachse zu verstehen. Diese Drehposition ist insbesondere für eine exakte Positionierung eines Förderguts eine relevante Ist-Größe. Schließlich kann auch ein Drehmoment der Antriebseinheit über die Busleitung geleitet werden, das beispielsweise aus einem Energiezustand wie dem durch einen in der Antriebseinheit eingesetzten Elektromotor fließenden Strom dargestellt sein kann. Insbesondere ermöglicht es diese Berechnung des Drehmoments, aus dem Summenstrom mehrerer, insbesondere aller Spulen eines Elektromotors, die Berechnung des Drehmoments durchzuführen, was eine präzisere Aussage zum Drehmoment ergibt als die ansonsten, bei externer Ableitung von außerhalb der Rolle nur mögliche Ermittlung aus dem Zuleitungsstrom der Energieleitung zur Förderrolle. Dies liegt darin begründet, dass der Zuleitungsstrom eine integrale und durch Pufferungen und Kompensationen gebildete und beeinflusste Größe darstellt, die nicht eine zeitlich aufgelöste Berechnung des Drehmoments in der Weise ermöglicht, wie es durch den Spulenstrom und insbesondere den Summenstrom aller Spulen ermöglicht wird. Unter der Drehzahl, Drehposition und dem Drehmoment der Antriebseinheit im Falle eines elektrischen Antriebs ist hierbei jeweils eine Drehzahl, Drehposition und ein Drehmoment zu verstehen, das sich relativ zwischen einem Rotor und einem Stator der Antriebseinheit ergeben kann, also einem feststehenden Teil und einem sich drehenden Teil der Antriebseinheit.

Die Daten können weiterhin zeitliche Ist-Betriebsdaten sein. Hierunter sind insbesondere zu verstehen eine Betriebsdauer, worunter der Zeitraum verstanden wird, unter dem die motorbetriebene Förderrolle in Rotation war, wobei diese Betriebsdauer kumulativ über die gesamte bisherige Einsatzzeit der Förderrolle gezählt werden kann oder sich ab einem bestimmten Startzeitpunkt, beispielsweise einem Tageszeitpunkt, einem Schichtstartzeitpunkt oder dergleichen errechnen lässt. Unter den Anschaltstunden ist demgegenüber zu verstehen, dass hierbei die Zeitdauer zu verstehen ist, unter der die motorbetriebene Förderrolle unter Strom steht und sich hierbei dreht oder nicht dreht, sodass auch Stillstandsperioden unter angeschaltetem Zustand mit erfasst werden. Auch hier kann wiederum kumulativ seit Inbetriebnahme der Förderrolle oder seit bestimmten Zeitpunkten die Berechnung erfolgen.

Des Weiteren können thermische Ist-Betriebsdaten über die Busleitung geleitet werden. Hierunter sind insbesondere echte Temperaturdaten zu verstehen, also Daten, die beispielsweise mittels eines Temperatursensors, der im Bereich einer im Förderrollenrohr vorhandenen Steuerplatine oder an anderer, besonders temperaturkritischer Stelle wie beispielsweise in den Spulen eines Elektromotors in der Antriebseinheit angeordnet sein können, ermittelt werden. Neben solchen tatsächlich gemessenen Temperaturen können auch aus anderen Ist-Betriebsdaten abgeleitete Temperaturdaten über die Busleitungen geleitet werden. So kann beispielsweise anhand einer Stromstärke, gegebenenfalls einer über die Zeit verlaufenden oder integrierten Stromstärke ein Temperaturwert, der in einer Spule, durch die dieser Strom fließt, vorherrscht, berechnet werden und der so berechnete Wert oder der für die Berechnung dienende Ursprungswert, also der Stromstärkenwert oder der über eine Zeitspanne integrierte Stromstärkenwert über die Busleitung übermittelt werden. Grundsätzlich ist zu verstehen, dass diese verschiedenen Betriebsdaten alternativ, jedoch auch alle Betriebsdaten oder ein Teil davon über die Busleitung gesendet werden können, da gerade durch Einsatz einer Busleitung und einer Datenübermittlung mittels eines entsprechenden Busprotokolls die Übersendung solcher Daten in Paketen mit einer solchen Datenrate erfolgen kann, dass hierdurch eine EchtzeitÜbermittlung von Ist-Daten mit hoher Datenfrequenz möglich wird.

Noch weiter ist es bevorzugt, die Förderrolle fortzubilden, indem die Busschnittstelle ausgebildet ist, um über die Busleitung Konfigurationsdaten zu leiten und/oder zu empfangen, welche einen Kennwert umfassen, der eine Bauart eines in der Antriebseinheit umfassten Getriebes charakterisiert, einen Kennwert umfassen, der ein Untersetzungsverhältnis eines in der Antriebseinheit umfassten Getriebes charakterisiert, einen Kennwert umfassen, der eine Bauart eines in der Antriebseinheit umfassten elektrischen Motors charakterisiert, einen Kennwert umfassen, der eine Nennleistung eines in der Antriebseinheit umfassten Motors charakterisiert, einen Kennwert umfassen, der einen Außendurchmesser des Förderrollenrohres charakterisiert, einen Kennwert umfassen, der eine Länge des Förderrollenrohres charakterisiert, einen Kennwert umfassen, der eine Außenbeschichtung des Förderrollenrohres charakterisiert, einen Kennwert umfassen, der ein in dem Förderrollenrohr angeordnete Funktionsmodul, wie beispielsweise einen Signaldecoder oder ein Bremsmodul charakterisiert und/oder, einen Kennwert umfasst, der ein Produktionsmerkmal der Förderrolle charakterisiert, insbesondere ein Produktionsdatum, eine Seriennummer und/oder Daten, welche im Produktionsprozess der Förderrolle durchgeführte Qualitätskontrollen beschreiben. Gemäß dieser Fortbildungsform werden über die Busleitung Konfigurationsdaten geleitet oder empfangen, also aus der Förderrolle hinausgegeben oder in die Förderrolle hineingegeben. Unter Konfigurationsdaten sind hierbei Daten zu verstehen, die mit der Konfiguration der motorbetriebenen Förderrolle zusammenhängen bzw. diese beschreiben, dies sind typischerweise Daten, die durch den Aufbau oder die einzelnen Komponenten der motorbetriebenen Förderrolle vorgegeben sind. Hierunter fällt beispielsweise ein Kennwert, der die Bauart eines Getriebes, das in der Antriebseinheit umfasst ist, oder die Bauart eines elektrischen Motors, der in der Antriebseinheit umfasst ist, charakterisiert. Unter Bauart ist hierbei zu verstehen, dass der Kennwert beispielsweise charakterisiert, ob ein Planetengetriebe oder ein Stirnradgetriebe in der motorbetriebenen Förderrolle verbaut ist oder ob es sich um ein Getriebe mit Kunststoffzahnrädern oder metallischen Zahnrädern handelt. Ebenso kann der Kennwert dementsprechend charakterisieren, ob ein Synchronmotor oder ein Asynchronmotor in der motorbetriebenen Förderrolle verbaut ist. Darüber hinaus kann ein Kennwert umfasst sein, der das Untersetzungsverhältnis des Getriebes charakterisiert, also eine direkte Beschreibung des Drehzahlverhältnisses eines Motors und des Förderrollenrohrs zueinander beinhaltet. In weiterer Fortbildung kann ein Kennwert umfasst sein, der eine Nennleistung eines Motors, der in der Antriebseinheit umfasst ist, also beispielsweise ein Kennwert, der eine Nennleistung von 20, 35 oder 50 Watt charakterisiert.

Neben diesen Kennwerten können weiterhin auch geometrische Größen durch einen Kennwert charakterisiert werden, beispielsweise der Außendurchmesser des Förderrollenrohres, der für die Bestimmung von Fördergeschwindigkeiten in Abhängigkeit der Drehzahl des Förderrollenrohres von Bedeutung ist und ein Kennwert, der die Länge des Förderrollenrohres charakterisiert, was für die maximale Drehmomentübertragung in bestimmten Anwendungsfällen von Bedeutung ist. Der Kennwert kann weiterhin eine Außenbeschichtung des Förderrollenrohres charakterisieren, beispielsweise eine Gummierung, die reibwertbeeinflussend ist und folglich für das Rutschverhalten der Rolle bei Beschleunigungs- und Abbremsverhalten eine wichtige Größe darstellt. Weiterhin kann ein Kennwert umfasst sein, der ein Funktionsmodul, das in das Förderrollenrohr eingesetzt ist, charakterisiert. Solche Funktionsmodule sind in bestimmten Anwendungsfällen wünschenswert, um zusätzliche Funktionen neben dem reinen Förderbetrieb bereitzustellen, beispielsweise eine Bremsenergie-Rückgewinnung, eine exakte Drehwinkelmessung und dergleichen. Schließlich kann der Kennwert ein Produktionsmerkmal der Förderrolle wie das Produktionsdatum, eine Seriennummer oder qualitätssicherungsrelevante Daten beschreiben. Dies ermöglicht es, über die Busleitung Daten zu leiten bzw. zu empfangen, die die Rolle unverwechselbar einem bestimmten Produktionsprozess, Zeitpunkt und einer bestimmten durchgeführten Qualitätssicherung zuordnen.

Der besondere Vorteil der Leitung und des Empfangs solcher Konfigurationsdaten über die Busleitung ist darin zu sehen, dass einerseits eine motorbetriebene Förderrolle im Rahmen ihrer Produktion über die Busleitung solche Daten empfängt und diese in einem Permanentspeicher innerhalb des Förderrollenrohres ablegt. Die motorbetriebene Förderrolle hat dadurch eine eigene Datenspeicherung dieser Daten, die jederzeit über die Busleitung ausgelesen werden können, um Kenntnis über den Aufbau, die Produktion, die Qualitätssicherung und gegebenenfalls andere Eigenschaften der Motorrolle zu erhalten und unmittelbar in eine Steuerungseinheit einzulesen, welche diese Motorrolle ansteuert. Hierdurch wird es beispielsweise möglich, die Getriebeuntersetzung oder die Leistung der motorbetriebenen Förderrolle im Zuge einer Installation und einer Programmierung von Förderabläufen einzulesen und ohne manuellen Eingriff eines Bedieners wie manuelle Eingaben, manuelle Umschaltungen oder dergleichen zu berücksichtigen. Vorteilhaft an dieser Fortbildungsform ist weiterhin, dass alle funktionsrelevanten Eigenschaften der Förderrolle innerhalb der Förderrolle selbst gespeichert und aus dieser ausgelesen werden können, sodass beispielsweise nicht die Notwendigkeit besteht, die Förderrolle anhand eines Merkmals wie einer Seriennummer zu identifizieren, um dann dieser Seriennummer zugeordnete Eigenschaften der Förderrolle aus einem gesonderten Speichermedium, einer Tabelle oder dergleichen abzulesen. Stattdessen sind diese Eigenschaften unmittelbar an bzw. in der Förderrolle vorhanden und gespeichert und können auch bei Demontage und Montage an anderem Ort, bei Umsetzvorgängen der Motorrolle, nach erfolgten Reparaturen oder Wartungen der Motorrolle zweifelsfrei und eindeutig zugeordnet werden.

Grundsätzlich kann aus den Ist-Betriebsdaten mittels einer Steuerungseinheit eine Temperatur innerhalb des Förderrollenrohres mit einer solchen Genauigkeit ermittelt werden, dass Überlastsituationen erkannt oder vorgebeugt werden können. So ist es beispielsweise möglich, aus dem Strom, der durch eine Spule eines Elektromotors in der Antriebseinheit fließt oder aus dem Summenstrom der Spulen eines solchen Elektromotors eine solche Temperaturbestimmung durchzuführen. Insbesondere ist es bevorzugt, dass innerhalb des Förderrollenrohres, insbesondere in einer Wicklung eines in der Antriebseinheit umfassten Elektromotors, ein Temperatursensor angeordnet ist und die Messdaten des Temperatursensors an die Busschnittstelle geleitet werden. Durch die Implementierung eines solchen Temperatursensors und die Bereitstellung von dessen Messdaten an der Busschnittstelle ist einerseits eine direkte Temperaturerfassung innerhalb des Förderrollenrohres möglich, und somit können sowohl zu hohe Temperaturen als auch besonders niedrige Temperaturen erkannt werden und in Abhängigkeit von beispielsweise einer oberen Temperaturgrenze oder auch einer unteren Temperaturgrenze andere Soll-Betriebsdaten, mit denen die Motorrolle angesteuert wird, angepasst werden. Eine Steuerungseinheit der motorbetriebenen Förderrolle kann aber auch solcherart ausgebildet sein, dass sie Messdaten eines solchen Temperatursensors berücksichtigt und zusätzlich aus anderen Betriebsdaten wie dem zuvor erläuterten, durch eine Spule fließenden Strom eine Temperaturermittlung vornimmt, um hieraus mit besserer Genauigkeit relevante Temperaturerhöhungen zu erkennen. Insbesondere kann auch ein Temperatursensor oder ein zusätzlicher Temperatursensor in der Wicklung eines Elektromotors oder unmittelbar benachbart zu einer solchen Wicklung angeordnet sein, um gerade an einer temperaturkritischen Stelle eine direkte Temperaturerfassung bereitzustellen.

Gemäß einer weiteren Fortbildungsform ist vorgesehen, dass innerhalb des Förderrollenrohres ein Beschleunigungssensor, ein akustischer Sensor wie beispielsweise ein Ultraschallsensor und/oder ein Dehnungssensor angeordnet ist und die Messdaten des Beschleunigungssensors, des akustischen Sensors bzw. des Dehnungssensors an die Busschnittstelle geleitet werden. Mittels dieser Art Sensorik wird es einerseits ermöglicht, Unfälle wie ein Herunterfallen und Aufschlagen der Förderrolle, sonstige Schlageinwirkungen auf die Förderrolle zu erfassen und hierdurch eine Historie zu der Förderrolle zu speichern, die etwaige Ausfälle oder Fehlfunktionen erklären kann oder die in eine Restlebensdauerprognose der Förderrolle einbezogen werden kann. Weiterhin können durch Messdaten dieser Sensoren Lagerschwingungen erfasst werden, die ein Indiz für Lagerverschleiß oder Lagerermüdung sind und ebenfalls in die Restlebensdauerprognose der Förderrolle durch eine entsprechend ausgestaltete Steuerungseinheit einberechnet werden können.

Gemäß einer weiteren bevorzugten Ausführungsform ist vorgesehen, dass innerhalb des Förderrollenrohres ein Detektor angeordnet ist, der ausgebildet ist, um eine Eigenschaft eines auf dem Förderrollenrohr aufliegenden Fördergutes zu erfassen und dass die Daten des Detektors an die Busschnittstelle geleitet werden. Ein solcher Detektor kann beispielsweise als Lichtschranke, als induktiver Sensor, als kapazitiver Sensor, als Ultraschallsensor ausgeführt sein und kann beispielsweise so angeordnet sein, dass er durch das Förderrollenrohr hindurch eine Eigenschaft des Fördergutes erfasst, das auf dem Förderrollenrohr aufliegt. Dies kann eine Barcode-Auslesung, eine RFID-Chip-Auslesung oder dergleichen sein, um hierdurch intelligente Informationen über das Fördergut mittels der Förderrolle zu erfassen und über die Busschnittstelle an eine entsprechende Steuerungseinheit senden zu können. Dabei kann der Detektor entweder drehfest innerhalb des Förderrollenrohres angeordnet sein oder sich mit dem Förderrollenrohr mitdrehen.

Erfindungsgemäß ist die motorbetriebene Förderrolle fortgebildet durch eine elektronische Steuerungseinheit. Die elektronische Steuerungseinheit kann ausgebildet sein, um aus an der Busschnittstelle vorliegenden Daten einen Prognosekennwert für die Restlebensdauer der motorbetriebenen Förderrolle abzuleiten. Diese Fortbildungsform adressiert eine spezifische Problematik von Förderrollen, die darin liegt, dass ein unvorhergesehenes Versagen der Förderrolle oftmals aufgrund seiner Auswirkung für die gesamte Förderstrecke oder Förderanlage große Nachteile für den Benutzer nach sich zieht und es daher vorteilhaft wäre, wenn solche Ausfälle nicht auftreten würden. Erfindungsgemäß wird aus den Daten, die an der Busschnittstelle vorliegen, ein Prognosekennwert für die Restlebensdauer der motorbetriebenen Förderrolle abgeleitet, wodurch es möglich wird, Förderrollen, deren Prognosekennwert einen Ausfall oder Defekt der Förderrolle in kurzer Zeit vermuten lassen, präventiv auszutauschen, bevor dieser Ausfall bzw. Defekt aufritt. Der Prognosekennwert kann dabei in vereinfachter Form in einem Warnsignal bestehen, welches das Ausfallrisiko binär anzeigt, präziser kann der Prognosekennwert beispielsweise in Form einer Ampel ausgegeben werden, bei der Grün für eine prognostizierte Restlebensdauer von beispielsweise mehr als drei Jahren, Gelb für eine prognostizierte Restlebensdauer von beispielsweise weniger als drei Jahren und Rot für eine prognostizierte Restlebensdauer von beispielsweise weniger als einem halben Jahr steht, wobei dies mit beiliegenden anderen zwei Grenzwerten definiert sein kann. Der Prognosekennwert kann hierbei sowohl Betriebsdaten berücksichtigen wie beispielsweise die vorgenannten zeitlichen Ist-Betriebsdaten, kann aber auch mechanische Ist-Betriebsdaten berücksichtigen, die insbesondere in Form von über die bisherige Betriebsdauer gemittelten Betriebsdaten oder in der bisherigen Betriebsdauer aufgetretenen Spitzen-Betriebsdaten einfließen kann. Ebenso können thermische Ist-Betriebsdaten als solche durchschnittlichen Werte oder als solche Maximalwerte in die Berechnung des Prognosekennwerts einfließen. Der Prognosekennwert kann darüber hinaus in vorteilhafter Weise auf Konfigurationsdaten der Förderrolle basieren, so kann beispielsweise in Abhängigkeit der Getriebeart oder Motorart ein entsprechender Prognosekennwert ermittelt werden.

Die elektronische Steuerungseinheit kann ausgebildet sein, um bei Ableitung eines Prognosekennwerts, der eine Unterschreitung eines vorbestimmten Restlebensdauergrenzwertes charakterisiert, ein Signal zu erzeugen und an eine Benutzerschnittstelle zu übermitteln. Ein solches Warnsignal ermöglicht es, eine kritische Unterschreitung eines Grenzwertes der prognostizierten Restlebensdauer innerhalb einer großen Förderanlage für einzelne Förderrollen zu erkennen und eine entsprechend signalisierte Förderrolle präventiv auszutauschen.

Erfindungsgemäß ist die motorbetriebene Förderrolle fortgebildet durch die elektronische Steuerungseinheit. Die elektronische Steuerungseinheit kann ausgebildet sein, um aus an der Busschnittstelle vorliegenden Daten zulässige Grenzwerte für mechanische oder thermische Betriebsdaten zu berechnen und zu verschieben. Gemäß dieser Fortbildungsform wird ein Grenzwert für die mechanischen oder thermischen Betriebsbedingungen der Motorrolle einerseits eingehalten, beispielsweise indem bei einer Überschreitung einer bestimmten Temperatur innerhalb des Förderrollenrohres die Förderrolle abgeschaltet oder die Drehzahl oder das Drehmoment der Förderrolle reduziert wird oder in Abhängigkeit der Betriebsdaten ein Grenzwert gesetzt bzw. verschoben. So kann beispielsweise dann, wenn eine vorbestimmte Temperaturgrenze überschritten wird, eine Drehmomentgrenze herabgesetzt werden, um eine weitere Temperaturerhöhung zu verhindern. Weiterhin kann aus den Betriebsdaten ein Prognosekennwert für die Restlebensdauer ermittelt werden und bei einem Prognosekennwert, der eine vorbestimmte Restlebensdauer unterschreitet, ein Grenzwert für eine zulässige Temperatur, ein zulässiges Drehmoment oder eine zulässige Drehzahl herabgesetzt werden, sodass die Förderrolle nur noch mit einer entsprechend verringerten Temperatur, Drehmoment oder Drehzahl betrieben werden kann.

Erfindungsgemäß ist die motorbetriebene Förderrolle fortgebildet durch die elektronische Steuerungseinheit. Die elektronische Steuerungseinheit kann ausgebildet sein, um aus an der Busschnittstelle vorliegenden Daten eine Konfigurationsempfehlung zu bestimmen und die Konfigurationsempfehlung über eine Benutzerschnittstelle an einen Benutzer auszugeben. Bei dieser bevorzugten Ausführungsform wird anhand der Daten, also der Betriebsdaten und/oder der Konfigurationsdaten, die an der Busschnittstelle vorliegen, mittels einer Steuerungseinheit eine Konfigurationsempfehlung bestimmt und an den Benutzer ausgegeben. Hierzu kann eine Benutzerschnittstelle an der Förderrolle selbst, an einer Steuerungseinheit, die extern von der Förderrolle angeordnet sein kann oder an einem an diese Steuerungseinheit angeschlossenen Steuerungsrechner mit Bildschirm oder dergleichen ausgebildet sein. Die Konfigurationsempfehlung kann hierbei einerseits eine Empfehlung für den Einsatz einer motorbetriebenen Förderrolle mit bestimmten Eigenschaften anstelle der motorbetriebenen Förderrolle innerhalb der Förderstrecke sein, beispielsweise wenn anhand der Daten festgestellt wird, dass die motorbetriebene Förderrolle mehrheitlich, also zu mehr als einem vorbestimmten Prozentanteil, im Bereich ihrer Maximalleistung, Maximaldrehzahl oder ihres maximalen Drehmoments betrieben wird. In diesem Fall kann die Konfigurationsempfehlung darin bestehen, eine Förderrolle mit höherer Leistung, Drehzahl bzw. Drehmoment einzusetzen.

Erfindungsgemäß ist die motorbetriebene Förderrolle fortgebildet durch die elektronische Steuerungseinheit. Die elektronische Steuerungseinheit kann ausgebildet sein, um aus an der Busschnittstelle vorliegenden Daten eine vorzunehmende Betriebsdatenänderung zu bestimmen und vorzugsweise weiter ausgebildet ist, die Antriebseinheit mit der Betriebsdatenänderung anzusteuern. Neben der zuvor erläuterten Konfigurationsempfehlung kann aus den Daten an der Busschnittstelle auch eine Betriebsdatenänderung bestimmt werden und diese unmittelbar vorzugsweise umgesetzt werden, indem die Antriebseinheit mit der entsprechenden Betriebsdatenänderung angesteuert wird. Eine solche Betriebsdatenänderung kann beispielsweise darin liegen, dass die Betriebsdrehzahl herabgesetzt wird, weil aus den Daten abgeleitet wird, dass hierdurch Staudruck erzeugt wird, dass hierdurch unerwünschte Schwingungen oder Temperaturen der Förderrolle erzeugt werden. Ebenso können Ansteuerungswerte der motorbetriebenen Förderrolle anzupassen, beispielsweise dann, wenn aus den Daten ein unerwünschtes Rutschen des Förderguts auf der Oberfläche des Förderrollenrohres beim Beschleunigen oder Abbremsen festgestellt wird, die Beschleunigung oder Verzögerung zu verringern, um dies zu vermeiden.

Erfindungsgemäß ist die motorbetriebene Förderrolle fortgebildet durch die elektronische Steuerungseinheit. Die elektronische Steuerungseinheit kann ausgebildet sein, um die Antriebseinheit mit ersten Soll-Betriebsdaten anzusteuern und aus an der Busschnittstelle vorliegenden Daten eine Betriebstemperatur der Förderrolle zu ermitteln und mit einem oberen und/oder unteren Temperaturgrenzwert zu vergleichen und dass die Steuerungseinheit weiter ausgebildet ist, um bei Überschreitung des oberen Temperaturgrenzwertes bzw. Unterschreitung des unteren Temperaturgrenzwertes die Antriebseinheit mit von den ersten geänderten zweiten Soll-Betriebsdaten anzusteuern, die eine geringere Temperaturerzeugung innerhalb der Antriebseinheit bewirken, insbesondere indem die Drehzahl und/oder das Drehmoment der Antriebseinheit verringert wird. Mit dieser Fortbildung ist ein effizienter und auf eine lange Lebensdauer ausgelegter Betrieb der Förderrolle möglich, bei dem eine zulässige thermische Belastungsgrenze nicht überschritten, jedoch auch nicht nennenswert unterschritten wird.

Erfindungsgemäß ist die motorbetriebene Förderrolle fortgebildet durch die elektronische Steuerungseinheit. Die elektronische Steuerungseinheit kann mit einem Präsenzsensor über die Busleitung signaltechnisch gekoppelt und ausgebildet sein, um ein Signal des Präsenzsensors zu erhalten, das die An- oder Abwesenheit eines Förderguts in einem Bereich einer Förderstrecke detektiert und um in Abhängigkeit des Signal die Antriebseinheit so anzusteuern, dass ein Kontakt oder ein Kontakt mit einer Kontaktkraft oberhalb einer vorbestimmten Kontaktkraftgrenze zwischen einem mit der Förderrolle geförderten ersten Fördergut und einem zweiten Fördergut auf der Förderstrecke vermieden wird. Mit dieser Fortbildungsform wird die Steuerungseinheit mittels der Busleitung mit einem Sensorsignal versorgt welches beispielsweise signalisieren kann, ob ein Bereich, in den ein Fördergut mittels der Förderrolle hineingefördert werden soll belegt ist oder frei ist. Sofern der Bereich frei ist oder soeben frei geworden ist, kann eine staudrucklose oder staudruckarme Förderung des Förderguts mittels der Förderrolle erfolgen. Diese Fortbildung erlaubt es, die staudrucklose bzw. -arme Förderung mittels einer Steuerungslogik durchzuführen, die innerhalb des Förderrollenrohres angeordnet ist, wodurch ein kompakter Aufbau der Steuerung und eine hohe Ausfallsicherheit aufgrund der Unabhängigkeit von externen Steuersignalen erreicht wird.

Erfindungsgemäß weist die elektronische Steuerungseinheit einen ersten Steuerungsschaltkreis, der innerhalb des Förderrollenrohres angeordnet ist und zur Ausführung einer oder mehrerer der Funktionen der Steuerungseinheit ausgebildet ist und einen zweiten Steuerungsschaltkreis, der mittels der Busleitung mit der Busschnittstelle signaltechnisch verbunden ist, außerhalb des Förderrollenrohres angeordnet ist und zur Ausführung einer oder mehrerer der Funktionen der Steuerungseinheit ausgebildet ist, auf. Die elektronische Steuerungseinheit ist auf zwei Steuerungsschaltkreise verteilt, von denen einer innerhalb des Förderrollenrohres und einer außerhalb des Förderrollenrohres angeordnet ist. Die Busleitung dient zum Austausch von Daten zwischen diesen beiden Steuerungsschaltkreisen und kann darüber hinaus auch übergeordnete zentrale Steuerungen, dezentrale Steuerungseinheiten, Einrichtungsrechner mit der Steuerungseinheit der Förderrolle verbinden. Die verschiedenen, zuvor erläuterten Funktionen der Steuerungseinheit können dabei in dem ersten oder in dem zweiten Steuerungsschaltkreis realisiert sein oder können durch logische Operationen, die über die Busschnittstelle miteinander koordiniert werden, in den beiden Schaltkreisen gemeinschaftlich ausgeführt werden.

Noch weiter ist es bevorzugt, die Förderrolle fortzubilden durch eine in dem Förderrollenrohr angeordnete elektronische Speichereinheit, die ausgebildet ist, um an der Busschnittstelle vorliegende Daten zu speichern. Durch eine solche elektronische Speichereinheit, die insbesondere ein permanenter Speicher mit eigener Spannungsversorgung oder ein elektrisch löschbarer Festspeicher (z.B. Flash-Speicher) sein kann, können bestimmte Daten, insbesondere die Konfigurationsdaten der Förderrolle, innerhalb der Förderrolle selbst gespeichert werden, was ein Auslesen und Zuordnen dieser Konfigurationsdaten zu jedem Zeitpunkt und auch bei Ausbau und Umsetzen der Förderrolle in andere Förderanlagen möglich bleibt. In der elektronischen Speichereinheit können ebenfalls aus den Betriebsdaten abgeleitete Ereignisse, beispielsweise hohe Temperaturereignissen oder hohen Drehmomentereignissen in der Förderrolle, hinsichtlich der Temperaturhöhe oder Drehmomenthöhe, des Zeitpunkts und deren Häufigkeit gespeichert werden, um auf diese Weise eine Historie zum Betrieb der Förderrolle in der Förderrolle abzuspeichern.

Gemäß einer noch weiteren bevorzugten Ausführungsform ist vorgesehen, dass die Busschnittstelle ausgebildet ist, um über die Busleitung mechanische Betriebsdaten zu empfangen, insbesondere eine Soll-Drehzahl der Antriebseinheit und/oder des Förderrollenrohres, eine Soll-Drehposition der Antriebseinheit und/oder des Förderrollenrohres und/oder ein Soll-Drehmoment der Antriebseinheit. Gemäß dieser Ausführungsform können über die Busleitung und Busschnittstelle mechanische Betriebsdaten in die Förderrolle gesendet werden, um hierdurch an die Antriebseinheit eine Soll-Drehzahl, eine Soll-Drehposition oder ein Soll-Drehmoment zu signalisieren. In der Förderrolle selbst kann auf Grundlage dieser Soll-Daten ein Regelkreis zur Einstellung der Ist-Werte auf diese Soll-Werte als elektronischer Schaltkreis vorgesehen sein. Alternativ kann dieser Regelkreis in einem elektronischen Schaltkreis außerhalb der Förderrolle vorgesehen sein und in diesem Fall die Regelung erfolgen, indem sowohl die Soll-Daten als auch die Ist-Daten über die Busleitung gesendet werden.

Gemäß einer noch weiteren bevorzugten Ausführungsform ist vorgesehen, dass die Antriebseinheit einen bürstenlosen Elektromotor umfasst und die Motorelektronik innerhalb des Förderrollenrohres angeordnet ist und ausgebildet ist, um Soll-Betriebsdaten über die Busleitung zu empfangen. Gemäß dieser Ausführungsform ist die Motorelektronik für den in der Antriebseinheit vorgesehenen bürstenlosen Elektromotor innerhalb des Förderrollenrohres angeordnet. Dies ermöglicht es, die Motorelektronik in einem elektronischen Schaltkreis bzw. einer Steuerungseinheit zu integrieren, die innerhalb des Förderrollenrohres angeordnet ist und weitere der zuvor erläuterten Funktionen ebenfalls implementieren kann. Durch die Anordnung der Motorelektronik in der Rolle müssen aus der Rolle insgesamt weniger Signale herausgeführt werden und weniger Signale in das Förderrollenrohr hineingeführt werden, was das Datenvolumen und die Anzahl der Signalleitungen reduziert. Als vorteilhaft hat sich bei dieser Motorweise ebenfalls erwiesen, dass die Energiezufuhr in die Rolle lediglich in Höhe der gesamten Motorleistung erfolgen muss, nicht jedoch hohe Anlaufströme über die Energieleitungen in die Förderrolle übertragen werden müssen, wie dies der Fall bei einem externen Motor wäre. Insbesondere kann dies durch ein innerhalb des Förderrollenrohres liegende Motorendstufe geleistet werden, das durch Modulation bei niedrigen Drehzahlen eine Beaufschlagung der Wicklungen mit einer geringeren Spannung und einem gegebenenfalls erforderlich hohen Anlaufstrom ermöglichen, ohne hierbei die Gesamtleistungsaufnahme der Förderrolle zu erhöhen. Dies ermöglicht es, dünnere Leitungen, größere Leitungslängen einzusetzen, reduziert die EMV-Störungsempfindlichkeit und erzeugt durch die Leitungen selbst weniger EMV-Störungen.

Gemäß einer hierzu alternativen Ausführungsform ist vorgesehen, dass die Antriebseinheit einen bürstenlosen Elektromotor umfasst und die Motorelektronik außerhalb des Förderrollenrohres angeordnet ist und ausgebildet ist, um für die MotorAnsteuerung, beispielsweise die Kommutierung, aber auch die andersförmige Ansteuerung der Wicklungen des Elektromotors erforderliche Daten zur Drehwinkelposition und/oder Drehzahl des Elektromotors über die Busleitung zu empfangen. Bei dieser Ausgestaltung ist die Motorelektronik des in der Antriebseinheit enthaltenen bürstenlosen Elektromotors außerhalb des Förderrollenrohres angeordnet. Diese Ausgestaltung kann bevorzugt sein, wenn die Motorelektronik nicht der in dem Förderrollenrohr vorhandenen, erhöhten Temperatur ausgesetzt sein soll oder wenn aus Wartungs- oder leichteren Austauschmöglichkeitsgründen die Motorelektronik nicht innerhalb des Förderrollenrohres angeordnet sein soll. Bei der außenliegenden Motorelektronik ist weiterhin prinzipbedingt die Drehposition der Antriebseinheit bzw. Förderrolle außerhalb des Förderrollenrohres verfügbar, da dieses für die Motoransteuerung notwendig ist.

Ein weiterer Aspekt, welches nicht Teil der Erfindung ist, betrifft eine Steuerungseinheit für eine motorbetriebene Förderrolle, umfassend einen ersten Spannungseingangsanschluss, ausgebildet zum Anschluss einer ersten Energieversorgungsleitung, einen zweiten Spannungseingangsanschluss, ausgebildet zum Anschluss einer zweiten Energieversorgungsleitung, einen ersten Spannungsausgangsanschluss, ausgebildet zum Anschluss der Energieversorgungsleitung für eine Antriebseinheit der motorbetriebenen Förderrolle, einen zweiten Spannungsausgangsanschluss, ausgebildet zum Anschluss einer Energieversorgungsleitung für einen Sensor oder einen Aktuator gekennzeichnet durch eine elektronischen Spannungsregelungs-Schaltkreis, der den ersten und zweiten Spannungseingangsanschluss und den ersten und zweiten Spannungsausgangsanschluss miteinander verbindet und der ausgebildet ist, um eine für einen Verbraucher, der an einen Spannungsausgangsanschluss angeschlossen ist, erforderliche Spannung zu erkennen und an dem Spannungsausgangsanschluss bereitzustellen, und dass der elektronische Schaltkreis ausgebildet ist, um eine Spannung in einer ersten Spannungshöhe an dem ersten und dem zweiten Spannungseingangsanschluss solcherart zu modulieren, dass eine erforderliche zweite Spannungshöhe, die geringer ist als die erste Spannungshöhe, an dem ersten oder zweiten Spannungsausgangsanschluss bereitzustellen.

Steuerungsvorrichtungen für Förderanlagen bzw. darin eingesetzte motorbetriebene Förderrollen erfüllen unterschiedliche Funktionen. Sie steuern einerseits die Förderrollen an, um bestimmte Förderrollen zu einem bestimmten Zeitpunkt in Rotation zu versetzen. Zum anderen steuern oder regeln sie diese Rotation nach Geschwindigkeit und Dauer, gegebenenfalls auch nach Drehmoment. Steuereinheiten werden weiterhin dazu eingesetzt, um aus der Förderstrecke Signale zu erhalten, beispielsweise Sensorsignale, welche die An- oder Abwesenheit eines Förderguts in einem bestimmten Bereich signalisieren oder andere Signale wie die Gewichtskraft eines Förderguts, dessen Länge oder Breite, eine Codierung, die auf dem Fördergut angebracht ist, zu empfangen und zu verarbeiten und/oder an eine zentrale Steuerungseinrichtung weiterzuleiten. Des Weiteren können über Steuerungseinheiten in Förderanlagen Aktuatoren angesteuert werden, die andere Funktionen und einen anderen Aufbau als eine Förderrolle haben, beispielsweise Ausschleuser mit einer linearen Bewegung, Hubeinrichtungen oder dergleichen.

Solche Steuerungseinheiten werden in bekannter Weise mit einer elektrischen Spannung versorgt, aus der einerseits die Förderrolle angesteuert werden kann, andererseits auch andere Einheiten wie ein Sensor, ein anderer Aktuator angesteuert wird oder aus der auch die Steuerungseinheit selbst ihre Betriebsspannung für ihren operativen Betrieb bezieht. Eine Anforderung an Förderanlagen ist in vielen Anwendungen die Möglichkeit, einen schnellen Not-Aus herbeiführen zu können. Dies wird häufig über eine Abschaltung der zentralen Spannungsversorgung erzielt, indem hierdurch die Spannungsversorgung zu den Aktuatoren, Förderrollen und die Steuer- und Regeleinheiten abgeschaltet wird. In bestimmten Anwendungsfällen ist dies jedoch nicht wünschenswert und stellt einen Nachteil dar, da hierdurch bei Wiederinbetriebnahme Verzögerungen auftreten, um die Steuerungen und Regelungen wieder zu aktivieren.

Eine weitere Anforderung an Förderanlagen besteht darin, einerseits große Leitungslängen bei möglichst verlustfreier Energieübertragung zu ermöglichen, andererseits hohe Drehzahl- und Drehmomente an den motorbetriebenen Förderrollen zu verwirklichen, um auch schwere Fördergüter schnell fördern zu können. Grundsätzlich könnten diese Anforderungen durch eine Erhöhung der Betriebsspannung in wesentlichen Punkten erfüllt werden, jedoch steht einer solchen Maßnahme entgegen, dass zahlreiche Sensoren und Aktuatoren, die in der Fördertechnik verfügbar sind und standardmäßig eingesetzt werden, mit einer derzeit gebräuchlichen Spannung von 24 Volt betrieben werden müssen, sodass eine Erhöhung der Spannung über diese 24 Volt hinaus ein systematisches Problem hinsichtlich der Einsatzvielfalt und Varianz der Komponenten in der Förderanlage erzeugt.

Gemäß des zuvor beschriebenen Aspekts der Erfindung werden diese Nachteile überwunden, indem eine Steuerungseinheit bereitgestellt wird, die mit zwei Spannungseingangsanschlüssen ausgerüstet ist und weiterhin ausgebildet ist, um aus daran anliegenden Spannungen eine niedrigere Spannung zu modulieren. Die Steuerungseinheit verwirklicht hierdurch unterschiedliche Funktionen und Möglichkeiten. Zum einen kann durch die Bereitstellung von zwei Spannungseingangsanschlüssen eine separate Not-Ausschaltung nur für die Energieversorgung der motorbetriebenen Förderrollen oder der Aktuatoren in der Förderanlage über den einen Spannungseingangsanschluss geschaltet werden, wohingegen der andere Spannungseingangsanschluss im Falle des Not-Aus weiterhin mit Energie versorgt wird und beispielsweise dazu benutzt werden kann, um Steuerungseinheiten und Regelungseinheiten in der Förderanlage zu versorgen. Dies gewährleistet einerseits einen zuverlässigen Not-Aus, andererseits ein schnelles Wiederanlaufen der Förderanlage nach einem solchen Not-Aus.

Weiterhin verfügt die Steuerungseinheit über zwei Spannungsausgangsanschlüsse. Einer dieser beiden Spannungsausgangsanschlüsse kann dazu eingesetzt werden, um die motorbetriebene Förderrolle anzuschließen und mit Spannung zu versorgen. Der andere Spannungsausgangsanschluss kann dazu eingesetzt werden, um einen anderen Aktuator oder einen Sensor oder dergleichen anzuschließen. Grundsätzlich ist zu verstehen, dass jeder Spannungsausgangsanschluss auch als kombinierter Anschluss mit Energieversorgungsleitungen und Steuerungs- oder Regelungsleitungen bzw. Sensorleitungen ausgeführt sein kann. Die Steuerungseinheit ist nun ausgebildet, um an dem ersten und dem zweiten Spannungsausgangsanschluss eine Spannung bereitzustellen, die niedriger ist als die Spannung, die am ersten oder zweiten Spannungseingangsanschluss zugeführt wird. Dies wird durch ein entsprechendes Schaltnetzteil, welches in die Steuerungseinheit integriert ist, erreicht.

Die Steuerungseinheit ermöglicht dadurch verschiedene Arten des Anschlusses und eine hohe Variabilität. Zum einen können beispielsweise an beiden Spannungseingangsanschlüssen eine hohe Betriebsspannung, beispielsweise 48 Volt, angelegt werden und hierdurch Übertragungsverluste minimiert werden und lange Leitungslängen ermöglicht werden. Diese 48 Volt können beispielsweise auch dazu genutzt werden, um eine am ersten Spannungsausgangsanschluss angeschlossene motorbetriebene Förderrolle zu betreiben und hierdurch hohe Leistungen dieser Förderrolle zu ermöglichen. Am zweiten Spannungsausgangsanschluss kann demgegenüber ein Aktuator oder ein Sensor angeschlossen sein, der eine Betriebsspannung von 24 Volt benötigt. Diese wird in entsprechender Weise innerhalb der Steuerungseinheit durch Modulation über das Schaltnetzteil bereitgestellt und dem angeschlossenen Aktuator bzw. Sensor zugeführt. Alternativ kann auch an einem der beiden Spannungseingangsanschlüsse eine niedrigere Spannung, beispielsweise 24 Volt, angeschlossen sein und diese dann ohne Modulation als niedrigere Spannung für Aktuatoren oder Sensoren am zweiten Spannungsausgangsanschluss durchgeleitet werden. Die Steuerungseinheit kann darüber hinaus in konventioneller Weise mit der derzeit üblichen Betriebsspannung von 24 Volt an einem oder beiden Spannungseingangsanschlüssen versorgt werden, um hierdurch einen zentralen Not-Aus oder einen selektiven Not-Aus nur für Förderrollen und Aktuatoren in der Förderanlage erzielen zu können und um diese Spannung an beide Spannungsausgangsanschlüsse bereitzustellen.

Die Steuerungseinheit kann fortgebildet werden, indem in dem elektronischen Spannungsregelungs-Schaltkreis der erste Spannungseingangsanschluss zur Versorgung des ersten Spannungsausgangsanschlusses geschaltet ist und dass der zweite Spannungseingangsanschluss zur Versorgung des zweiten Spannungsausgangsanschlusses und zur Versorgung einer in die Steuerungseinheit integriert Steuerschaltung für eine an den ersten Spannungsausgangsanschluss angeschlossenen motorbetriebene Förderrolle geschaltet ist. Mit dieser Fortbildung wird ein separater Not-Aus für die Spannungsversorgung der motorbetriebenen Förderrolle ermöglicht, ohne dass hierbei die Steuerfunktion, welche in die Steuerungseinheit integriert ist, für diese motorbetriebene Förderrolle, ebenfalls spannungslos geschaltet werden muss. Stattdessen kann über den zweiten Spannungseingangsanschluss diese Steuerschaltung für die motorbetriebene Förderrolle auch im Falle eines Not-Aus weiter in Betrieb bleiben und ermöglicht daher ein schnelles Wiederanlaufen nach einem Not-Aus.

### Ein weiterer Aspekt der Erfindung ist ein Verfahren nach Anspruch 17 zum Betrieb einer motorbetriebenen

Förderrolle, mit den Schritten: Antreiben eines Förderrollenrohrs, das drehbar um ein Achselement gelagert ist, mittels einer innerhalb des Förderrollenrohres angeordneten Antriebseinheit, die für eine Drehmomenterzeugung und Rotationsbewegung zwischen dem Achselement und dem Förderrollenrohr ausgebildet und mit dem Achselement und dem Förderrollenrohr mechanisch gekoppelt ist, Zuführen von Energie zu der Antriebseinheit über eine von außerhalb des Förderrollenrohres zu der Antriebseinheit verlaufenden Energieleitung, Steuern der Antriebseinheit über eine von außerhalb des Förderrollenrohres zu der Antriebseinheit verlaufende Datenleitung, dadurch gekennzeichnet, dass die Datenleitung als Busleitung ausgebildet ist und Steuersignale über einer in dem Förderrollenrohr angeordneten Busschnittstelle zu der Antriebseinheit gesendet werden.

Das Verfahren kann fortgebildet werden, indem über die Busleitung Daten aus der Motorrolle heraus geleitet oder in der Motorrolle empfangen werden, welche mechanische Ist-Betriebsdaten, insbesondere eine Drehzahl der Antriebseinheit und/oder des Förderrollenrohres, eine Drehposition der Antriebseinheit und/oder des Förderrollenrohres und/oder ein Drehmoment der Antriebseinheit, zeitliche Ist-Betriebsdaten, insbesondere Betriebsdauer und/oder Anschaltdauer, und/oder thermische Ist-Betriebsdaten, insbesondere einen Temperaturkennwert, einen zur Berechnung eines Temperaturwert dienenden Strom durch eine Spule der Antriebseinheit beschreiben.

Das Verfahren kann fortgebildet werden, indem die Busleitung Konfigurationsdaten aus der Motorrolle heraus geleitet oder in der Motorrolle empfangen werden, welche einen Kennwert umfassen, der eine Bauart eines in der Antriebseinheit umfassten Getriebes charakterisiert, einen Kennwert umfassen, der ein Untersetzungsverhältnis eines in der Antriebseinheit umfassten Getriebes charakterisiert, einen Kennwert umfassen, der eine Bauart eines in der Antriebseinheit umfassten elektrischen Motors charakterisiert, einen Kennwert umfassen, der eine Nennleistung eines in der Antriebseinheit umfassten Motors charakterisiert, einen Kennwert umfassen, der einen Außendurchmesser des Förderrollenrohres charakterisiert, einen Kennwert umfassen, der eine Länge des Förderrollenrohres charakterisiert, einen Kennwert umfassen, der eine Außenbeschichtung des Förderrollenrohres charakterisiert, einen Kennwert umfassen, der ein in dem Förderrollenrohr angeordnete Funktionsmodul, wie beispielsweise einen Signaldecoder oder ein Bremsmodul charakterisiert, einen Kennwert umfasst, der ein Produktionsmerkmal der Förderrolle charakterisiert, insbesondere ein Produktionsdatum, eine Seriennummer und/oder Daten, welche im Produktionsprozess der Förderrolle durchgeführte Qualitätskontrollen beschreiben.

Das Verfahren kann fortgebildet werden, indem Messdaten eines innerhalb des Förderrollenrohres, insbesondere in einer Wicklung eines in der Antriebseinheit umfassten Elektromotors Temperatursensors an die Busschnittstelle geleitet werden.

Das Verfahren kann fortgebildet werden, indem Messdaten eines innerhalb des Förderrollenrohres angeordneten Beschleunigungssensors, eines akustischen Sensors wie beispielsweise eines Ultraschallsensors, und/oder eines Dehnungssensors an die Busschnittstelle geleitet werden.

Das Verfahren kann fortgebildet werden, indem eine Eigenschaft eines auf dem Förderrollenrohr aufliegenden Fördergutes mittels eines innerhalb des Förderrollenrohres angeordneten Detektors erfasst und an die Busschnittstelle geleitet werden.

Das Verfahren kann fortgebildet werden, indem an der Busschnittstelle vorliegenden Daten durch eine elektronische Steuerungseinheit ein Prognosekennwert für die Restlebensdauer der motorbetriebenen Förderrolle abgeleitet wird.

Das Verfahren kann fortgebildet werden, indem bei einer Unterschreitung eines vorbestimmten Restlebensdauergrenzwertes ein Signal erzeugt und an eine Benutzerschnittstelle übermittelt wird.

Das Verfahren kann fortgebildet werden, indem an der Busschnittstelle vorliegenden Daten mittels einer elektronischen Steuerungseinheit ein Grenzwert für mechanische oder thermische Betriebsdaten berechnet und verschoben wird.

Das Verfahren kann fortgebildet werden, indem aus an der Busschnittstelle vorliegenden Daten mittels einer elektronischen Steuerungseinheit eine Konfigurationsempfehlung bestimmt und die Konfigurationsempfehlung über eine Benutzerschnittstelle an einen Benutzer ausgegeben wird.

Das Verfahren kann fortgebildet werden, indem aus an der Busschnittstelle vorliegenden Daten mittels einer elektronischen Steuerungseinheit eine Betriebsdatenänderung bestimmt und vorzugsweise die Antriebseinheit mit der Betriebsdatenänderung angesteuert wird.

Das Verfahren kann fortgebildet werden, indem an der Busschnittstelle vorliegende Daten in einer in dem Förderrollenrohr angeordneten elektronischen Speichereinheit gespeichert werden.

Das Verfahren kann fortgebildet werden, indem an der Busschnittstelle über die Busleitung mechanische Betriebsdaten empfangen werden, insbesondere eine Soll-Drehzahl der Antriebseinheit und/oder des Förderrollenrohres, eine Soll-Drehposition der Antriebseinheit und/oder des Förderrollenrohres und/oder ein Soll-Drehmoment der Antriebseinheit.

Das Verfahren kann fortgebildet werden, indem die Antriebseinheit einen bürstenlosen Elektromotor umfasst, der mittels einer innerhalb des Förderrollenrohres angeordneten Motorelektronik angesteuert wird und dass Soll-Betriebsdaten über die Busleitung für die Antriebseinheit über die Busleitung von der Busschnittstelle empfangen werden.

Das Verfahren kann fortgebildet werden, indem die Antriebseinheit einen bürstenlosen Elektromotor umfasst der mittels einer außerhalb des Förderrollenrohres angeordneten Motorelektronik angesteuert wird, und dass für die Ansteuerung des Elektromotors erforderliche Daten zur Drehwinkelposition und/oder Drehzahl des Elektromotors über die Busleitung gesendet werden.

Ein weiterer Aspekt, welches nicht Teil der Erfindung ist, ist ein Verfahren zur Spannungsversorgung einer motorbetriebenen Förderrolle, mit den Schritten: Zuführen von elektrischer Energie mit einer ersten Spannung an einem ersten Spannungseingangsanschluss einer Steuerungseinheit, Zuführen von elektrischer Energie mit einer ersten Spannung an einem zweiten Spannungseingangsanschluss einer Steuerungseinheit, Bereitstellen von elektrischer Energie mit der ersten Spannung an einem ersten Spannungsausgangsanschluss der Steuerungseinheit, Bereitstellen von elektrischer Energie mit einer zweiten Spannung, die niedriger ist als die erste Spannung, an einem zweiten Spannungsausgangsanschluss der Steuerungseinheit, wobei mittels eines elektronischen Spannungsregelungs-Schaltkreis, der den ersten und zweiten Spannungseingangsanschluss und den ersten und zweiten Spannungsausgangsanschluss miteinander verbindet, die erste Spannung in die zweite Spannung moduliert wird.

Gemäß eines zweiten Aspekts, welches nicht Teil der Erfindung ist, wird die eingangs genannte Aufgabe durch ein System gelöst, umfassend wenigstens eine motorbetriebene Förderrolle mit ein Förderrollenrohr mit einem darin ausgebildeten Hohlraum und einer Längsachse, einem Schaft, der in der Längsachse verläuft und auf dem das Förderrollenrohr mittels wenigstens eines Drehlagers gelagert ist, eine in dem Hohlraum des Förderrollenrohrs angeordnete elektrische Antriebseinheit, mit einem Stator und einem Rotor, welche in der Längsachse des Förderrollenrohrs angeordnet sind wobei die Antriebseinheit eine Rotationsbewegung des Förderrollenrohrs relativ zu dem Schaft erzeugt, insbesondere indem der Rotor mit dem Förderrollenrohr und der Stator mit dem Schaft verbunden ist, und weiterhin umfassend eine Steuereinheit zum Steuern der Antriebseinheit; weiterhin umfassend eine Tragrolle, insbesondere eine benachbart zu der motorbetriebenen Förderrolle und von dieser mittels eines Zugmittelgetriebes angetriebene Tragrolle , wobei die motorbetriebene Förderrolle und die Tragrolle mit ihren Drehachsen im Wesentlichen parallel zueinander angeordnet sind, wobei die Tragrolle ein Rollenrohr mit einem darin ausgebildeten Rollen-Hohlraum und einer Längsachse, und einen Rollen-Schaft, der in der Längsachse verläuft und auf dem das Förderrollenrohr mittels wenigstens eines Rollen-Drehlagers gelagert ist, aufweist; wobei die Steuereinheit direkt an dem Rollen-Schaft der Tragrolle befestigt ist und vorzugsweise einen Frequenzumrichter aufweist..

In Abweichung zur zuvor beschriebenen motorbetriebenen Förderrolle gemäß des ersten Aspekts ist gemäß dieses zweiten Aspekt vorgesehen, dass die Steuereinheit nicht in oder an der motorbetriebenen Förderrolle befestigt ist, sondern auf dem Rollen-Schaft der benachbarten Tragrolle. Die Tragrolle ist vorzugsweise von der motorbetriebenen Förderrolle mittels eines Zugmittelgetriebes, beispielsweise eines Bandes, angetrieben ist. Solche Tragrollen sind nicht durch einen eigenen Antrieb angetrieben, sondern werden passiv über das Zugmittelgetriebe in Rotation versetzt. Eine Verkabelung der Steuereinheit mit der Antriebseinheit kann dann beispielsweise aus dem Schaft der motorbetriebenen Förderrolle heraus, entlang eines Rahmens der Förderanlage, in dem die motorbetriebene Förderrolle und die Tragrolle angeordnet sind, und dann zu der Steuereinheit geführt werden. Die Verkabelung ist also vollständig gerüstnah bzw. am Gerüst entlang geführt und vor Kollision mit bewegten Objekten weitgehend geschützt.

Die Steuereinheit lässt sich auf diese Weise an oder in einer Tragrolle positionieren, die für Servicemitarbeiter leicht zugänglich ist, oder die aufgrund ihrer Position thermisch gut zur Positionierung von sensiblen elektronischen Bauteilen geeignet ist. Ferner kann gemäß dieses Aspekts die Steuereinheit besser und leichter gegen Öl und Flüssigkeit geschützt werden, welche üblicherweise zur Schmierung und Reinigung einer motorbetriebenen Förderrolle verwendet werden kann

Die Steuereinheit und deren Positionierung bezüglich der Tragrolle gemäß des dritten Aspekts, welches nicht Teil der Erfindung ist, weist gleiche und ähnliche Ausführungsformen und Weiterbildungen auf wie die motorbetriebene Förderrolle und deren Ansteuerung bezüglich des ersten Aspekts. Diese Ausführungsformen und Weiterbildungen sind insbesondere in den Unteransprüchen niedergelegt. Insofern wird für weitere Merkmale und deren Vorteile auf die obige Beschreibung zum ersten Aspekt vollumfänglich Bezug genommen.

In einer ersten Variante ist die Steuereinheit außerhalb des Tragrollenrohrs an dem Rollen-Schaft befestigt. Der Rollen-Schaft wird üblicherweise beidseitig vom Tragrollenrohr in entsprechenden Aufnahmen gehalten, die an einem Gestell oder Rahmen vorgesehen sind. Der Rollen-Schaft kann durchgängig oder mehrteilig sein, das heißt er kann sich als eine Vollachse durch die gesamte Tragrolle erstrecken, oder der Rollen-Schaft erstreckt sich auf beiden Seiten aus dem Tragrollenrohr heraus und bildet zwei Achsstummel. Diese Achsstummel erstrecken sich vorzugsweise axial nach außen zu den entsprechenden Aufnahmen an einem Gestell zur Aufnahme der Tragrolle. Gemäß dieser Variante ist die Steuereinheit an einem derartigen axialen Ende, welches axial äußerlich der entsprechenden Schaftaufnahmen vorsteht, befestigt.

In einer zweiten Variante ist die Steuereinheit innerhalb des Rollen-Hohlraums der Tragrolle aufgenommen und an dem Rollen-Schaft befestigt. Hierdurch ist die Kompaktheit der Tragrolle und somit des Systems insgesamt weiter verbessert. Die Steuereinheit ist in dem Tragrollenrohr aufgenommen, eine Stromversorgung kann mittels eines durch den Rollen-Schaft geführten Kabels erfolgen. Das Kabel kann dann von außerhalb des Gestells durch den Rollen-Schaft bis ins Innere des Tragrollenrohrs, und dort an die Steuereinheit angeschlossen sein. Diese Variante hat den Vorteil, dass die Steuereinheit besonders gut geschützt werden kann. Insbesondere ist es möglich einen Schutz der Steuereinheit bis hin zu IP66 bzw. IP69K zu erzielen. Bevorzugte Ausführungsformen der Erfindung werden anhand der beliegenden Figuren beschrieben. Es zeigen:
- Fig. 1: eine Prinzipzeichnung einer erfindungsgemäßen motorbetriebenen Förderrolle in einem Längsschnitt,
- Fig. 2: eine Prinzipanordnung einer Spannungsversorgung einer motorbetriebenen Förderrolle in einer Förderanordnung,
- Fig. 3: ein Ablaufdiagramm einer automatisierten Schlupfsteuerung,
- Fig. 4: ein Ablaufdiagramm einer Bestimmung eines Kennwerts für die Restlebensdauer einer motorbetriebenen Förderrolle,
- Fig. 5: ein Ablaufdiagramm einer Bestimmung eines Kennwerts für die Motorenbelastung einer erfindungsgemäßen Förderrolle,
- Fig. 6: ein Ablaufdiagramm zur Bestimmung eines Kennwerts einer Motorbeanspruchung einer erfindungsgemäßen Förderrolle.
- Fig. 7: eine schematische Ansicht eines Systems, wobei die Steuereinheit direkt an dem Rollen-Schaft einer Tragrolle befestigt ist; und
- Fig. 8: einen Längsschnitt durch eine Tragrolle mit darin angeordneter Steuereinheit.

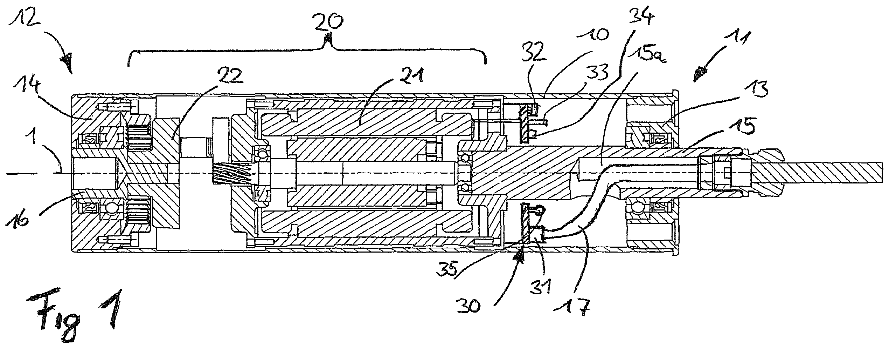

Bezug nehmend zunächst auf Fig. 1 umfasst eine motorbetriebene Förderrolle gemäß einer Ausführungsform der Erfindung ein Förderrollenrohr 10 mit einem ersten Ende 11 und einem diesem gegenüberliegenden zweiten Ende 12. Im ersten Ende 11 ist eine Endkappe 13 eingesetzt, die ein erstes Achselement 15 drehbar mittels einer Lagerungseinheit 17 umgibt. Das erste Achselement 15 ragt seitlich aus dem ersten Ende 11 des Förderrollenrohres hinaus.

In entsprechender Weise ist am zweiten Ende 12 eine Endkappe 14 eingesetzt, die ein zweites Achselement 16 mittels einer Lagerungseinheit 18 umgibt. Die zweite Endkappe 14 ist solcherart ausgeführt, dass umlaufende Nuten an ihrer äußeren Umfangsfläche das Einlegen eines Keilrippenriemens ermöglichen und hierdurch eine Übertragung von Drehmoment und Rotation von dem Förderrollenrohr auf eine benachbarte mitlaufende Förderrolle ermöglicht. Die beiden Achselemente 15 und 16 sind koaxial zueinander angeordnet und definieren eine Drehachse 1, um die sich das Förderrollenrohr um die beiden Achselemente 15, 16 drehen kann, wenn diese in einem entsprechenden Gestell montiert sind.

Das erste Achselement 15 ist mit einer innenliegenden koaxial zur Drehachse 1 verlaufenden Bohrung 15a ausgerüstet, durch die eine Busleitung 17 von außen in das Förderrollenrohr hineingeführt werden kann.

Innerhalb des Förderrollenrohres ist eine Antriebseinheit 20 angeordnet, die einen bürstenlosen Asynchronmotor 21 und ein Planetenradgetriebe 22 umfasst. Der Stator des Motors 21 sowie das Hohlrad des Planetenradgetriebes 22 sind drehmomentfest mit dem ersten Achselement 15 verbunden und hierdurch abgestützt. Der Rotor des Motors 21 treibt über eine Motorabtriebswelle das Sonnenrad des Planetengetriebes 22 an. Die Planetenräder des Planetenradgetriebes sind über den Planetenradträger mit einer Getriebeabtriebswelle verbunden, welche drehmomentfest mit dem Förderrollenrohr gekoppelt ist, um ein Drehmoment und eine Rotation auf das Förderrollenrohr zu übertragen.

In dem Förderrollenrohr 10 ist weiterhin eine Steuerungseinheit 30 angeordnet, die als elektronischer Schaltkreis auf einer Platine ausgeführt ist. Die Steuerungseinheit 30 ist mit dem Motor 21 signaltechnisch verbunden und beinhaltet die Motorelektronik für den Motor 21. Zu diesem Zweck wird die Drehwinkelposition des Motors 21 mittels entsprechender Drehgeber, die unmittelbar mit der Steuerungseinheit 30 zusammenwirken, erfasst und die Wicklungen des Motors 21 aus der Motorelektronik der Steuerungseinheit 30 entsprechend mit Spannung beaufschlagt, um auf diese Weise eine gewünschte Drehzahl und ein gewünschtes Drehmoment zu erzeugen.

Die Steuerungseinheit 30 umfasst weiterhin eine Busschnittstelle 31, die mittels der Busleitung 17 Daten von der Steuerungseinheit zu einem außerhalb des Förderrollenrohres 10 angeordneten Datenempfängers senden kann und von einem außerhalb des Förderrollenrohres 10 angeordneten Datensenders Daten empfangen kann. Diese Daten können mechanische Betriebsdaten, thermische Betriebsdaten oder zeitliche Betriebsdaten sein, weiterhin können diese Daten Konfigurationsdaten sein.

Die Steuerungseinheit 30 umfasst weiterhin eine elektronische Speichereinheit 32, in der solche Betriebsdaten und Konfigurationsdaten abgespeichert sind. Die elektronische Speichereinheit umfasst insbesondere Konfigurationsdaten, die dauerhaft in der elektronischen Speichereinheit abgelegt sind und die beispielsweise die Bauart des Planetengetriebes, des Motors, der Förderrolle und einer auf dem Förderrollenrohr angeordneten Beschichtung beschreiben und folglich über die Busschnittstelle auslesbar machen. Die Steuerungseinheit 30 wird durch eine Programmierung in Form einer Firmware betrieben. Diese Firmware kann über die Busleitung 17 und Busschnittstelle 31 in die Steuerungseinheit aufgespielt werden und upgedated werden.

In der Steuerungseinheit 30 ist weiterhin ein Temperatursensor 33, ein Beschleunigungssensor 34, ein akustischer Sensor 35 integriert. Es ist zu verstehen, dass wahlweise auf diese zusätzlichen Sensoren in anderen Ausführungsformen verzichtet werden kann und nur einer oder einige dieser Sensoren vorgesehen sein können. Die Sensoren 33-35 dienen dazu, zusätzliche Messdaten innerhalb des Förderrollenrohres zu bestimmen und sind mit der Busschnittstelle verbunden, um diese Daten in der Steuerungseinheit verarbeiten zu können und über die Busleitung an einen außerhalb des Förderrollenrohres angeordneten Datenempfänger zu senden. Mittels dieser zusätzlichen Sensoren kann eine kritische Betriebstemperatur der Förderrolle, kritische Schwingungen und dergleichen ermittelt werden und bei der Ansteuerung der Förderrolle berücksichtigt werden.

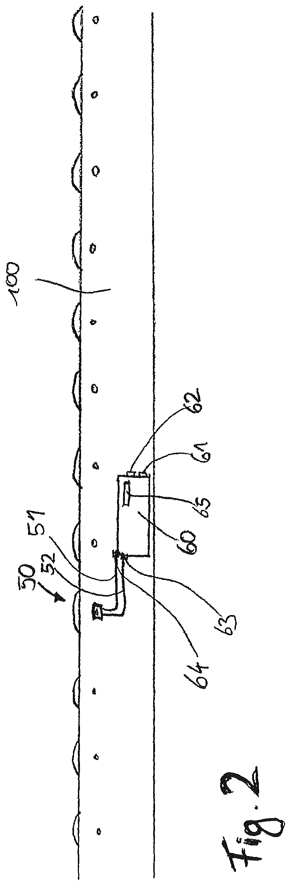

Fig. 2 zeigt einen Ausschnitt aus einer Förderstrecke, die mit einer erfindungsgemäßen motorbetriebenen Förderrolle ausgerüstet sein kann. Eine motorbetriebene Förderrolle 50 ist mittels einer Busleitung 51 und einer Spannungsversorgungsleitung 52 mit einer Steuerungseinheit 60 verbunden, die außerhalb des Förderrollenrohres angeordnet ist und beispielsweise an einem Rahmenelement eines Gestelles 100, in dem die Förderrolle montiert ist, befestigt sein kann. Die Steuerungseinheit 60 weist einen Datenanschluss 64 auf, an dem die Busleitung 51 angeschlossen ist. Der Dateneingang ist mit einer Dateneingangsschnittstelle gekoppelt, die ausgebildet ist, um einerseits zu erkennen, ob an der Datenschnittstelle eine Busleitung angeordnet ist oder eine Signalleitung, die für die Übermittlung eines analogen Steuersignals ausgebildet ist und kann in entsprechender Weise Daten über eine angeschlossene Busleitung bzw. analoge Datenleitung übermitteln. Die Steuerungseinheit 60 verfügt weiterhin über zwei getrennte Energieversorgungsanschlüsse 61, 62. Diese Energieversorgungsanschlüsse können als Steckerbuchse-Anschlusspunkte ausgeführt sein oder können zur Durchschleifung einer Spannungsversorgungsleitung ausgebildet sein. Der erste Spannungsversorgungsanschluss 61 dient zum Empfang einer elektrischen Leistung, die zur Spannungsversorgung der motorbetriebenen Förderrolle ausgebildet ist. Der zweite Spannungsversorgungsanschluss dient zur Spannungsversorgung der Steuerungseinheit 60 selbst. Weiterhin ist an der Steuerungseinheit ein Spannungsausgang 63 vorhanden, der mit der Spannungsleitung 52 gekoppelt ist, um die motorbetriebene Förderrolle mit Spannung zu versorgen.

Die beiden Spannungsversorgungsanschlüsse 61, 62 sind jeweils ausgebildet, um zwei unterschiedliche Spannungen, beispielsweise 48 Volt und 24 Volt, zu empfangen. Auf diese Weise ist es möglich, die Spannungsversorgung der Steuerungseinheit an beiden Anschlussstellen mit entweder 48 Volt oder 24 Volt oder einen der beiden mit 48 Volt und den anderen mit 24 Volt zu betreiben. Die Steuerungseinheit 60 ist ausgebildet, um die an den Spannungsanschlussstellen 61, 62 anliegende Versorgungsspannung zu erkennen. Weiterhin ist die Steuerungseinheit 60 ausgebildet, um eine an einer der beiden Spannungsversorgungsanschlüssen anliegende Spannung zu modulieren, falls hieraus eine andere, insbesondere niedrigere Spannung benötigt wird als anliegt. So kann beispielsweise die Steuerungseinheit 60 selbst oder daran angeschlossene Sensoren oder Aktuatoren mit 24 Volt betrieben werden, auch wenn an beiden Spannungsversorgungsanschlüssen 48 Volt angeschlossen ist, indem diese Spannung entsprechend moduliert wird. Die Steuerungseinheit 60 verfügt weiterhin über eine universelle Schnittstelle zum Anschluss von weiteren Aktuatoren und Sensoren, die im gezeigten Ausführungsbeispiel als integrale Parallelschnittstelle 65 ausgeführt ist, jedoch ebenso gut in Form mehrerer separater Anschlüsse bereitgestellt sein kann, beispielsweise, um einen Lichtschrankensensor anzuschließen oder um weitere Aktuatoren an die Steuerungseinheit 60 anzuschließen und aus dieser heraus anzusteuern. Die Spannungsversorgung eines solchen Sensors oder Aktuators erfolgt aus der Steuerungseinheit selbst und kann mit der ersten oder der zweiten Spannung erfolgen, unabhängig davon, welche Spannung an den beiden Spannungsversorgungsanschlüssen 61, 62 anliegt.

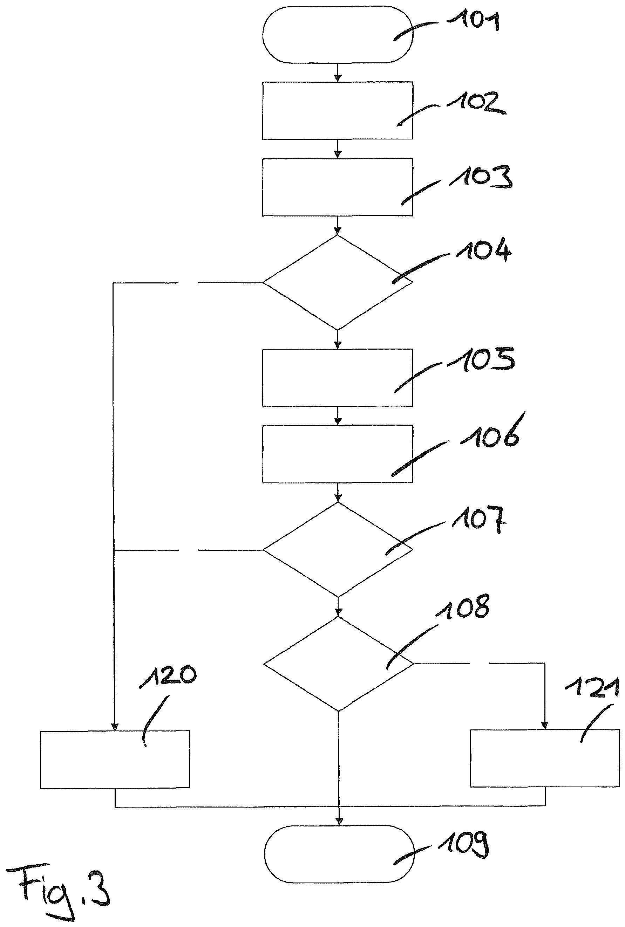

Fig. 3 zeigt ein Ablaufdiagramm für eine automatisierte Schlupfkontrolle einer motorbetriebenen Förderrolle gemäß der Erfindung. Eine solche automatisierte Schlupfkontrolle dient in erster Linie dazu, Fördergut, das auf der Rolle aufliegt, in effizienter Weise zu beschleunigen oder abzubremsen, wobei unter effizient hierbei verstanden wird, dass eine möglichst hohe Beschleunigung und Abbremsung erreicht wird, ohne dass hierbei Schlupf zwischen dem Fördergut und der Oberfläche des Förderrollenrohres auftritt. Die automatische Schlupfkontrolle ist hierbei insbesondere als lernende Steuerung bzw. Regelung ausgeführt und kann daher Veränderungen im laufenden Betrieb der motorbetriebenen Förderrolle kompensieren. Solche Veränderungen können beispielsweise darin liegen, dass die Oberfläche der Förderrolle verschmutzt, dass die Förderrolle in Kontakt mit unterschiedlichen Gegenflächen des Förderguts kommt oder dass sich eine Beschichtung der Oberfläche des Förderrollenrohres abnutzt oder verändert und sich hierdurch der Reibkoeffizient zwischen dem Förderrollenrohr und dem Fördergut verändert.

Ausgehend vom Start 101 wird die aktuelle Rotationsgeschwindigkeit der Förderrolle in Echtzeit durch die Steuerung erfasst 102 und hieraus in einem weiteren Schritt 103 die Beschleunigung in Echtzeit anhand der Veränderung der Rotationsgeschwindigkeit berechnet. In einem Schritt 104 wird dann geprüft, ob diese Beschleunigung außerhalb von vorbestimmten Haftreibungsgrenzen liegt und falls dies festgestellt wird, wird in einem Schritt 120 das Motordrehmoment reduziert. Liegt die Beschleunigung hingegen nach Feststellung im Schritt 104 innerhalb der Haftreibungsgrenzen, wird der aktuelle Motorstrom in Echtzeit erfasst 105 und hieraus in einem Schritt 106 aus dem tatsächlichen Motorstrom, der als Summenstrom der Wicklungen eines Elektromotors vorliegen kann, das aktuelle Motordrehmoment in Echtzeit berechnet. In einem Schritt 107 wird dieses Motordrehmoment mit vorbestimmten Haftreibungsgrenzen verglichen und bei Feststellen des Überschreitens dieser Haftreibungsgrenzen wiederum im Schritt 120 das Motordrehmoment reduziert. Sind die Haftreibungsgrenzen hingegen nicht überschritten, wird in einem weiteren Schritt 108 geprüft, ob die Ist-Beschleunigung unterhalb einer Soll-Beschleunigung liegt. Falls dies der Fall ist, wird ein einem Schritt 121 das Motordrehmoment erhöht. Ist dies nicht der Fall, kommt der Prozess zu einem Ende 109, an das sich unmittelbar der Startpunkt 101 mit einer erneuten Prüfung anschließen kann, um auf diese Weise eine laufende Echtzeitüberwachung des Schlupfes zu erzielen.

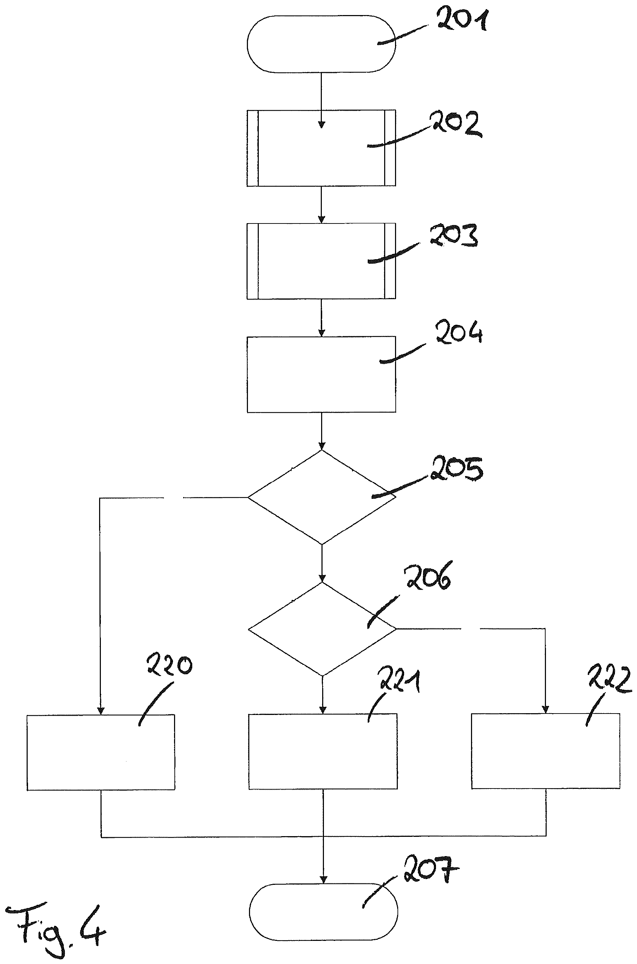

Fig. 4 zeigt ein Ablaufdiagramm zur Berechnung der Motor-Restlebensdauer. Nach einem Start 201 wird in zwei Schritten 202 und 203 die aktuelle Motorbeanspruchung und Motorbelastung ermittelt. Hieraus wird in einem Schritt 204 die verbleibende Motorlebensdauer berechnet. In einem Schritt 205 wird aus dieser verbleibenden Motorlebensdauer geprüft, ob diese oberhalb einer ersten, hohen Restlebensdauergrenze ist und falls dies der Fall ist, in einem Schritt 220 die Anzeige des Motorzustands auf Grün gesetzt. Liegt die verbleibende Motorlebensdauer unterhalb der hohen Restlebensdauergrenze, wird in einem Schritt 206 geprüft, ob die verbleibende Motorlebensdauer unterhalb eines unteren Restlebensdauer-Grenzwertes liegt und falls dies zutrifft in einem Schritt 222 der Kennwert für den Motorstatus auf Rot gesetzt. Trifft dies im Schritt 206 nicht zu, wird in einem Schritt 221 der Kennwert für den Motorstatus auf Gelb gesetzt. Jeweils nach den Schritten 220, 221, 222 endet der Prozess und kann sich unmittelbar wieder mit dem Schritt 201 wiederholen, um auf diese Weise eine Echtzeitüberwachung der verbleibenden Motorlebensdauer zu erreichen.

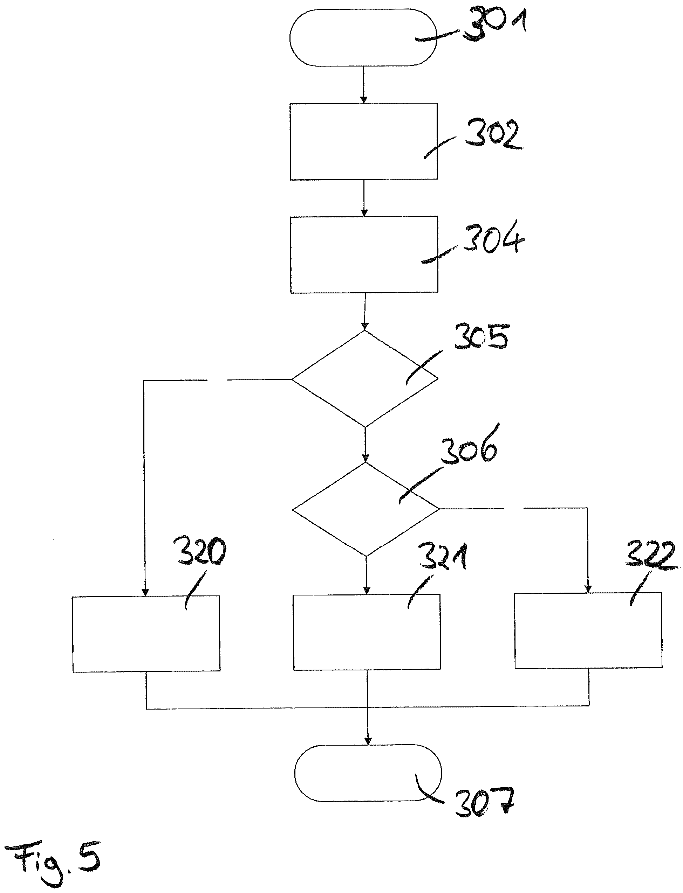

Fig. 5 zeigt ein schematisches Ablaufdiagramm für die Berechnung der Motorbeanspruchung. Nach einem Start 301 wird in einem Schritt 302 die aktuelle Motortemperatur gemessen, beispielsweise anhand der Wicklungssummenströme. Hieraus wird in einem Schritt 304 die Motorbeanspruchung berechnet. In einem Schritt 305 wird aus dieser Motorbeanspruchung geprüft, ob diese unterhalb einer ersten, niedrigen Motorbeanspruchungsgrenze ist und falls dies der Fall ist, in einem Schritt 320 die Anzeige des Motorbeanspruchungszustands auf Grün gesetzt. Liegt die Motorbeanspruchung oberhalb der unteren Motorbeanspruchungsgrenze, wird in einem Schritt 306 geprüft, ob die Motorbeanspruchung oberhalb eines oberen Motorbeanspruchungsgrenzwertes liegt und falls dies zutrifft in einem Schritt 322 der Kennwert für den Motorbeanspruchungsstatus auf Rot gesetzt. Trifft dies im Schritt 306 nicht zu, wird in einem Schritt 321 der Kennwert für den Motorbeanspruchungsstatus auf Gelb gesetzt. Jeweils nach den Schritten 320, 321, 322 endet 307 der Prozess und kann sich unmittelbar wieder mit dem Schritt 301 wiederholen, um auf diese Weise eine Echtzeitüberwachung der Motorbeanspruchung zu erreichen.

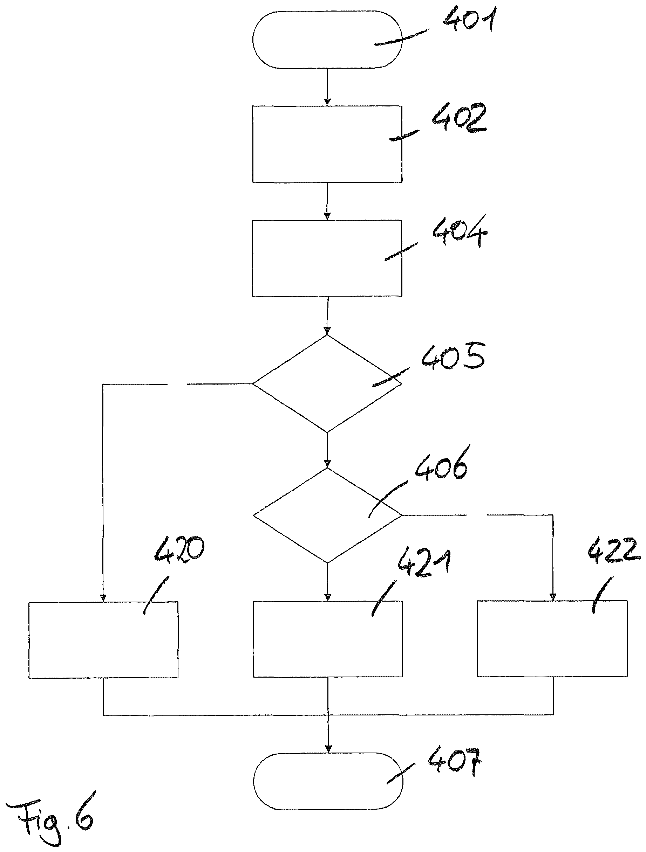

Fig. 6 zeigt ein schematisches Ablaufdiagramm für eine Echtzeitüberwachung der Motorbelastung. Nach einem Start 401 wird in einem Schritt 402 die aktuelle Motordrehzahl und der aktuelle Motorstrom ermittelt. Hieraus wird in einem Schritt 404 die aktuelle Motor-Abgabeleistung und daraus wiederum die aktuelle Motorbelastung berechnet. In einem Schritt 405 wird aus dieser Motorbelastung geprüft, ob diese unterhalb einer ersten, niedrigen Motorlastgrenze ist und falls dies der Fall ist, in einem Schritt 420 die Anzeige der Motorbelastung auf Grün gesetzt. Liegt die Motorbelastung oberhalb der unteren Motorlastgrenze, wird in einem Schritt 406 geprüft, ob die Motorbelastung oberhalb eines oberen Motorlastgrenzwertes liegt und falls dies zutrifft in einem Schritt 422 der Kennwert für die Motorbelastung auf Rot gesetzt. Trifft dies im Schritt 406 nicht zu, wird in einem Schritt 421 der Kennwert für die Motorbelastung auf Gelb gesetzt. Jeweils nach den Schritten 420, 421, 422 endet der Prozess und kann sich unmittelbar wieder mit dem Schritt 401 wiederholen, um auf diese Weise eine Echtzeitüberwachung der Motorbelastung zu erreichen.

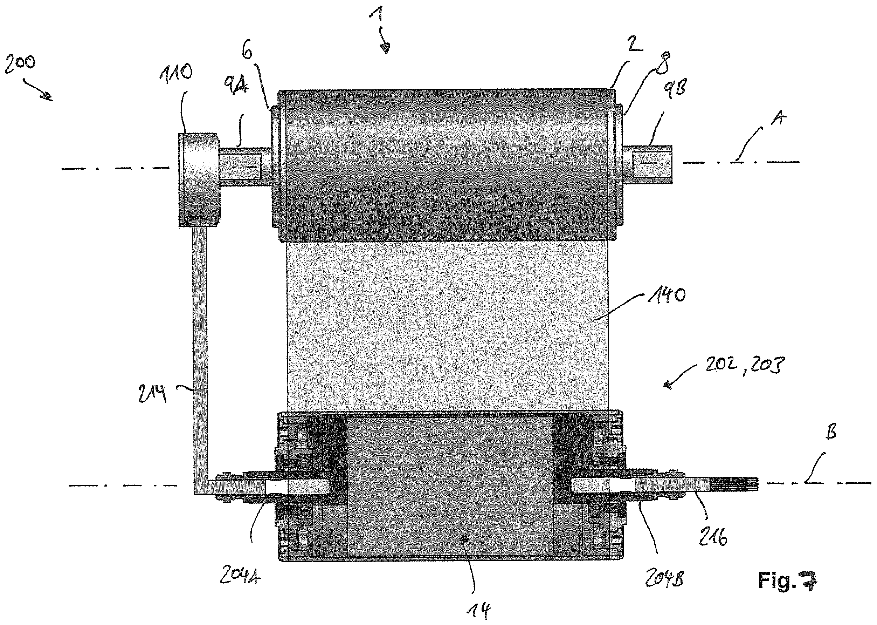

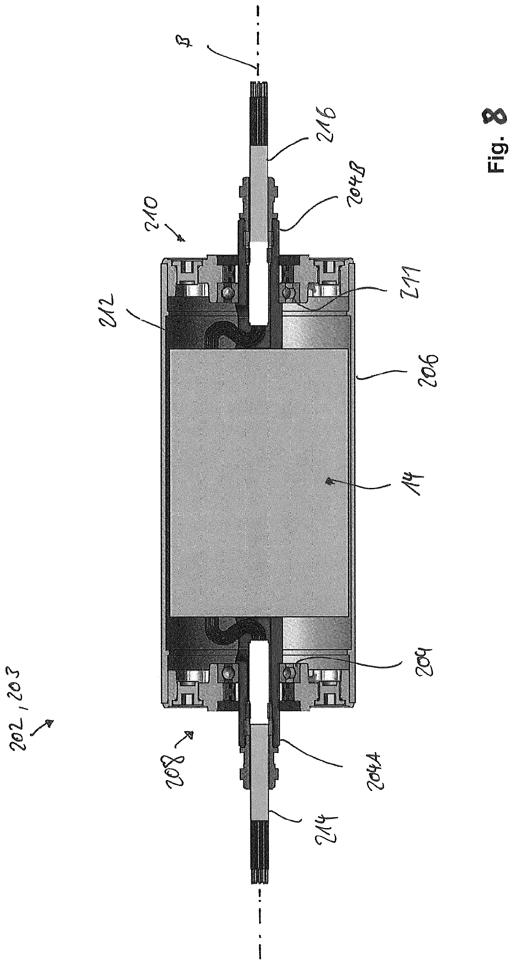

Die Fig. 7 und 8 illustrieren nun ein System umfassend wenigstens eine motorbetriebene Förderrolle 1 sowie eine Tragrolle 202. Gleiche und ähnliche Elemente sind mit gleichen Bezugszeichen wie in den ersten Ausführungsbeispielen versehen. Insofern wird vollumfänglich auf die obige Beschreibung Bezug genommen.

In Abweichung zu dem ersten Ausführungsbeispiel der zuvor beschriebenen motorbetriebenen Förderrolle ist in diesem konkreten Ausführungsbeispiel des Systems 200 (Fig. 7 und 8) die Steuereinheit 14 direkt an einem Rollen-Schaft 204A, 204B der Tragrolle202 befestigt.

Die Tragrolle 202 ist in diesem Ausführungsbeispiel als angetriebene Leerlaufrolle 203 ausgebildet und im Detail in Fig. 8 gezeigt. Die Tragrolle 203 weist ein Tragrollenrohr 206 auf, auf dessen radial äußerer Oberfläche ein Zugmittel 140 läuft. Das Tragrollenrohr 206 ist über einen ersten Lagerdeckel 208 und einen zweiten Lagerdeckel 210 drehbar auf dem Rollen-Schaft 204A, 204B gelagert, welcher drehfest in einem Gestell aufnehmbar ist. Dazu ist an dem ersten Lagerdeckel 208 erstes Rollen-Drehlager 209 und an dem zweiten Lagerdeckel 210 ein zweites Rollen-Drehlager 211 vorgesehen. Konkret ist der Rollen-Schaft 204A, 204B hier geteilt und als zwei Achstummel ausgebildet, die entlang der Zentralachse B durch die ersten und zweiten Lagerdeckel 208, 210 verlaufen.

Aufgrund der Lagerdeckel 208, 210 ist ein innerer Rollen-Hohlraum 212 gut gegen die Umgebung abgedichtet. Tragrollen 202 sind nicht angetrieben, und der Hohlraum 212 ist im Betrieb lediglich mit Luft gefüllt.

In dieser Ausführungsform wird der Rollen-Hohlraum 212 genutzt, um darin die Steuereinheit 14 samt Frequenzumrichter unterzubringen.

In anderen Ausführungsbeispielen kann vorgesehen sein, dass die Steuereinheit 14 außerhalb des Tragrollenrohrs 206 auf dem Rollen-Schaft 204A, 204B befestigt ist.

Dadurch, dass die Steuereinheit 14 im Rollen-Hohlraum 212 angeordnet ist, ist diese besonders gut vor thermischen Einflüssen aufgrund der Wärmeentwicklung der Antriebseinheit und gegen Umwelteinflüsse geschützt Insbesondere ist es möglich, einen Schutz gemäß der Klasse IP66 bzw. IP69K zu erzielen.

In diesem Ausführungsbeispiel sind sowohl der erste Achsstummel 204A als auch der zweite Achsstummel 204B hohl ausgeführt, sodass eine erste elektrische Leitung 214 durch den ersten Achsstummel 204A zur Steuereinheit 14 verläuft. Diese erste elektrische Leitung verbindet die Steuereinheit 14 mit der motorbetriebenen Förderrolle 1 und kann beispielsweise als Busleitung ausgeführt sein. In dem in Fig. 7 gezeigten Ausführungsbeispiel verbindet die erste elektrische Leitung die Steuereinheit konkret mit einem Anzeigepaneel 110, welches seinerseits über den Achsstummel 9A mit der Antriebseinheit 82 der motorbetriebene Förderrolle 1 gekoppelt ist. Durch den zweiten Rollen-Achsstummel 204B verläuft ein zweites elektrisches Kabel 216, welches dazu dient, die Steuereinheit 14 mit elektrischem Strom zu versorgen. Die Steuereinheit 14 wandelt dann die zugeführte Energie und kann beispielsweise eine elektronische Kommutierungssteuerung beinhalten, um die Antriebseinheit 82 entsprechend anzutreiben, und stellt diese über die erste elektrische Leitung 214 bereit.

Die erste elektrische Leitung 214 verläuft vorzugsweise entlang eines Gestells oder Gerüsts, an dem sowohl die motorbetriebene Förderrolle 1 als auch die Tragrolle 202 mittels der entsprechenden Schafte bzw. Schaftanschnitte 9A, 9B, 204A, 204B aufgenommen sind.

Insofern soll verstanden werden, dass die Steuereinheit 14 ebenfalls drehfest ist und sich im Betrieb lediglich das Rollenrohr 206 dreht.

Durch dieses System 200 sind die Vorteile des ersten Ausführungsbeispiels weitergebildet. Durch das Anzeigepaneel 110, welches an der motorbetriebenen Förderrolle 1 angeordnet ist, kann der Bediener immer noch direkt an der motorbetriebenen Förderrolle entsprechende Werte ablesen und Einstellungen vornehmen. Die Steuereinheit 14 ist allerdings entfernt von der motorbetriebenen Förderrolle 1, aber immer noch in dessen räumlicher Nähe angeordnet, insbesondere am gleichen Gerüst. Die Steuereinheit ist dabei vor äußeren Einflüssen gut geschützt, und der Rollen-Hohlraum 212 sinnvoll genutzt.

## Patentansprüche

1. Motorbetriebene Förderrolle (50), umfassend:
- ein Förderrollenrohr (10), das drehbar um ein Achselement (15,16) gelagert ist,
- eine innerhalb des Förderrollenrohres (10) angeordnete Antriebseinheit (20), die für eine Drehmomenterzeugung und Rotationsbewegung zwischen dem Achselement (15,16) und dem Förderrollenrohr (10) ausgebildet und mit dem Achselement (15,16) und dem Förderrollenrohr (10) mechanisch gekoppelt ist,
- eine von außerhalb des Förderrollenrohres (10) zu der Antriebseinheit (20) verlaufende Energieleitung (52),
- eine von außerhalb des Förderrollenrohres (10) zu der Antriebseinheit (20) verlaufende Datenleitung (51),
**dadurch gekennzeichnet, dass** die Datenleitung (51) als Busleitung ausgebildet ist und über eine in dem Förderrollenrohr (10) angeordnete Busschnittstelle (31) mit der Antriebseinheit (20) signaltechnisch verbunden ist,
wobei die motorbetriebene Förderrolle (50) eine elektronische Steuerungseinheit (30) umfasst,
- die ausgebildet ist, um aus an der Busschnittstelle (31) vorliegenden Daten einen Prognosekennwert für die Restlebensdauer der motorbetriebenen Förderrolle (50) abzuleiten, oder
- die ausgebildet ist, um aus an der Busschnittstelle (31) vorliegenden Daten zulässige Grenzwerte für mechanische oder thermische Betriebsdaten zu berechnen und zu verschieben, oder
- die ausgebildet ist, um aus an der Busschnittstelle (31) vorliegenden Daten eine Konfigurationsempfehlung zu bestimmen und die Konfigurationsempfehlung über eine Benutzerschnittstelle an einen Benutzer auszugeben, oder
- die ausgebildet ist, um aus an der Busschnittstelle (31) vorliegenden Daten eine vorzunehmende Betriebsdatenänderung zu bestimmen und vorzugsweise weiter ausgebildet ist, die Antriebseinheit (20) mit der Betriebsdatenänderung anzusteuern, oder
- die ausgebildet ist, um die Antriebseinheit (20) mit ersten Soll-Betriebsdaten anzusteuern und aus an der Busschnittstelle (31) vorliegenden Daten eine Betriebstemperatur der Förderrolle (50) zu ermitteln und mit einem oberen und/oder unteren Temperaturgrenzwert zu vergleichen und dass die Steuerungseinheit (30) weiter ausgebildet ist, um bei Überschreitung des oberen Temperaturgrenzwertes bzw. Unterschreitung des unteren Temperaturgrenzwertes die Antriebseinheit (20) mit von den ersten geänderten zweiten Soll-Betriebsdaten anzusteuern, die eine geringere Temperaturerzeugung innerhalb der Antriebseinheit (20) bewirken, insbesondere indem die Drehzahl und/oder das Drehmoment der Antriebseinheit (20) verringert wird, oder
- die mit einem Präsenzsensor signaltechnisch gekoppelt und ausgebildet ist, um ein Signal des Präsenzsensors zu erhalten, das die An- oder Abwesenheit eines Förderguts in einem Bereich einer Förderstrecke detektiert und um in Abhängigkeit des Signal die Antriebseinheit (20) so anzusteuern, dass ein Kontakt oder ein Kontakt mit einer Kontaktkraft oberhalb einer vorbestimmten Kontakt kraftgrenze zwischen einem mit der Förderrolle (50) geförderten ersten Fördergut und einem zweiten Fördergut auf der Förderstrecke vermieden wird.

2. Motorbetriebene Förderrolle (50) nach Anspruch 1,
**dadurch gekennzeichnet, dass** die Busschnittstelle (31) ausgebildet ist, um über die Busleitung (51) Daten zu leiten, welche
- mechanische Ist-Betriebsdaten, insbesondere eine Drehzahl derAntriebseinheit (20) und/oder des Förderrollenrohres (10), eine Drehposition der Antriebseinheit (20) und/oder des Förderrollenrohres (10) und/oder ein Drehmoment der Antriebseinheit (20),
- zeitliche Ist-Betriebsdaten, insbesondere Betriebsdauer und/oder Anschaltdauer, und/oder
- thermische Ist-Betriebsdaten, insbesondere einen Temperaturkennwert, einen zur Berechnung eines Temperaturwert dienenden Strom durch eine Spule der Antriebseinheit (20)
beschreiben,
wobei die Busschnittstelle (31) elektronische Schaltkreise umfasst, die solche Daten entsprechend erkennen und verarbeiten bzw. im Falle einer Versendung entsprechend aufarbeiten.

3. Motorbetriebene Förderrolle (50) nach Anspruch 1 oder 2,
**dadurch gekennzeichnet, dass** die Busschnittstelle (31) ausgebildet ist, um über die Busleitung (51) Konfigurationsdaten zu leiten und/oder zu empfangen, welche
- einen Kennwert umfassen, der eine Bauart eines in der Antriebseinheit (20) umfassten Getriebes (22) charakterisiert,
- einen Kennwert umfassen, der ein Untersetzungsverhältnis eines in der Antriebseinheit (20) umfassten Getriebes (22) charakterisiert,
- einen Kennwert umfassen, der eine Bauart eines in der Antriebseinheit (20) um fassten elektrischen Motors (21) charakterisiert,
- einen Kennwert umfassen, der eine Nennleistung eines in der Antriebseinheit (20) umfassten Motors (21) charakterisiert,
- einen Kennwert umfassen, der einen Außendurchmesser des Förderrollenrohres (10) charakterisiert,
- einen Kennwert umfassen, der eine Länge des Förderrollenrohres (10) charakterisiert,
- einen Kennwert umfassen, der eine Außenbeschichtung des Förderrollenrohres (10) charakterisiert,
- einen Kennwert umfassen, der ein in dem Förderrollenrohr (10) angeordnete Funktionsmodul, wie beispielsweise einen Signaldecoder oder ein Bremsmodul charakterisiert,
- einen Kennwert umfasst, der ein Produktionsmerkmal der Förderrolle (50) charakterisiert, insbesondere ein Produktionsdatum, eine Seriennummer und/oder Daten, welche im Produktionsprozess der Förderrolle (50) durchgeführte Qualitätskontrollen beschreiben,
wobei die motorbetriebene Förderrolle (50) im Rahmen ihrer Produktion über die Busleitung (51) solche Daten empfängt und diese in einem Permanentspeicher (32) innerhalb des Förderrollenrohres (10) ablegt.

4. Motorbetriebene Förderrolle (50) nach einem der vorhergehenden Ansprüche,
**dadurch gekennzeichnet, dass** innerhalb des Förderrollenrohres (10), insbesondere in einer Wicklung eines in der Antriebseinheit (20) umfassten Elektromotors (21), ein Temperatursensor (33) angeordnet ist und die Messdaten des Temperatursensors (33) an die Busschnittstelle (31) geleitet werden.

5. Motorbetriebene Förderrolle (50) nach einem der vorhergehenden Ansprüche,
**dadurch gekennzeichnet, dass** innerhalb des Förderrollenrohres (10) ein Beschleunigungssensor (34), ein akustischer Sensor (35) und/oder ein Dehnungssensor angeordnet ist
und die Messdaten des Beschleunigungssensors (34), des akustischen Sensors (35) bzw. des Dehnungssensors an die Busschnittstelle (31) geleitet werden.

6. Motorbetriebene Förderrolle (50) nach einem der vorhergehenden Ansprüche,
**dadurch gekennzeichnet, dass** innerhalb des Förderrollenrohres (10) ein Detektor angeordnet ist, der ausgebildet ist, um eine Eigenschaft eines auf dem Förderrollenrohr (10) aufliegenden Fördergutes zu erfassen und dass die Daten des Detektors an die Busschnittstelle (31) geleitet werden.

7. Motorbetriebene Förderrolle (50) nach dem vorhergehenden Anspruch,
**dadurch gekennzeichnet, dass** die elektronische Steuerungseinheit (30) ausgebildet ist, um bei Ableitung eines Prognosekennwerts, der eine Unterschreitung eines vorbestimmten Restlebensdauergrenzwertes charakterisiert, ein Signal zu erzeugen und an eine Benutzerschnittstelle zu übermitteln.

8. Motorbetriebene Förderrolle (50) nach Anspruch 7,
**dadurch gekennzeichnet, dass** die elektronische Steuerungseinheit (30) ausgebildet ist, um bei Erzeugung des Signals einen Grenzwert für eine zulässige Temperatur, ein zulässiges Drehmoment oder eine zulässige Drehzahl herabzusetzen und die Antriebseinheit (20) mit einem Sollwert anzusteuern, der unterhalb des herabgesetzten Grenzwertes liegt.

9. Motorbetriebene Förderrolle (50) nach einem der vorhergehenden Ansprüche,
**dadurch gekennzeichnet, dass** die elektronische Steuerungseinheit (30) innerhalb des Förderrollenrohres (10) angeordnet ist.

10. Motorbetriebene Förderrolle (50) nach einem der vorhergehenden Ansprüche,
**dadurch gekennzeichnet, dass** die elektronische Steuerungseinheit (30) mittels der Busleitung (51) mit der Busschnittstelle (31) signaltechnisch verbunden ist und außerhalb des Förderrollenrohres (10) angeordnet ist.

11. Motorbetriebene Förderrolle (50) nach einem der vorhergehenden Ansprüche,
**dadurch gekennzeichnet, dass** die elektronische Steuerungseinheit (30) einen ersten Steuerungsschaltkreis aufweist, der innerhalb des Förderrollenrohres (10) angeordnet ist und zur Ausführung einer oder mehrerer der Funktionen der Steuerungseinheit (30) ausgebildet ist und einen zweiten Steuerungsschaltkreis aufweist, der mittels der Busleitung (51) mit der Busschnittstelle (31) signaltechnisch verbunden ist, außerhalb des Förderrollenrohres (10) angeordnet ist und zur Ausführung einer oder mehrerer der Funktionen der Steuerungseinheit (30) ausgebildet ist.

12. Motorbetriebene Förderrolle (50) nach einem der vorhergehenden Ansprüche,
**gekennzeichnet durch** eine in dem Förderrollenrohr (10) angeordnete elektronische Speichereinheit (32), die ausgebildet ist, um an der Busschnittstelle (31) vorliegende Daten zu speichern.

13. Motorbetriebene Förderrolle (50) nach dem vorhergehenden Anspruch 12,
**dadurch gekennzeichnet, dass** die elektronische Speichereinheit (32) ausgebildet ist, um Sensordaten, insbesondere durch einen Sensor gemäß Anspruch 5 erfasste Sensordaten zu speichern und vorzugsweise einem Datum zuzuordnen.

14. Motorbetriebene Förderrolle nach einem der vorhergehenden Ansprüche,
**dadurch gekennzeichnet, dass** die Busschnittstelle (31) ausgebildet ist, um über die Busleitung (51) mechanische Betriebsdaten zu empfangen, insbesondere eine Soll-Drehzahl der Antriebseinheit (20) und/oder des Förderrollenrohres (10), eine Soll-Drehposition der Antriebseinheit (20) und/oder des Förderrollenrohres (10) und/oder ein Soll-Drehmoment der Antriebseinheit (20).

15. Motorbetriebene Förderrolle (50) nach einem der vorhergehenden Ansprüche,
**dadurch gekennzeichnet, dass** die Antriebseinheit (20) einen bürstenlosen Elektromotor (21) umfasst und die Motorelektronik innerhalb des Förderrollenrohres (10) angeordnet ist und ausgebildet ist, um Soll-Betriebsdaten über die Busleitung (51) zu empfangen.

16. Motorbetriebene Förderrolle (50) nach einem der vorhergehenden Ansprüche,
**dadurch gekennzeichnet, dass** die Antriebseinheit (20) einen bürstenlosen Elektromotor (21) umfasst und die Motorelektronik außerhalb des Förderrollenrohres (10) angeordnet ist und ausgebildet ist, um für die Ansteuerung des Elektromotors (21) erforderliche Daten zur Drehwinkelposition und/oder Drehzahl des Elektromotors (21) über die Busleitung (51) zu empfangen.

17. Verfahren zum Betrieb einer motorbetriebenen Förderrolle (50) nach einem der vorherigen Ansprüche, mit den Schritten:
- Antreiben eines Förderrollenrohrs (10), das drehbar um ein Achselement (15,16) gelagert ist, mittels einer innerhalb des Förderrollenrohres (10) angeordneten Antriebseinheit (20), die für eine Drehmomenterzeugung und Rotationsbewegung zwischen dem Achselement (15,16) und dem Förderrollenrohr (10) ausgebildet und mit dem Achselement (15,16) und dem Förderrollenrohr (10) mechanisch gekoppelt ist,
- Zuführen von Energie zu der Antriebseinheit (20) über eine von außerhalb des Förderrollenrohres (10) zu der Antriebseinheit (20) verlaufenden Energieleitung (52),
- Steuern der Antriebseinheit (20) über eine von außerhalb des Förderrollenrohres (10) zu der Antriebseinheit (20) verlaufende Datenleitung (51),
**dadurch gekennzeichnet, dass** die Datenleitung (51) als Busleitung (51) ausgebildet ist und Steuersignale über einer in dem Förderrollenrohr (10) angeordneten Busschnittstelle (31) zu der Antriebseinheit (20) gesendet werden.

## Claims

1. A motor-driven conveyor roller (50) comprising:
- a conveyor roller tube (10) which is rotatably mounted around an axle element (15,16),
- a drive unit (20) arranged within the conveyor roller tube (10), which is designed for torque generation and rotational movement between the axle element (15, 16) and the conveyor roller tube (10) and is mechanically coupled to the axle element (15, 16) and the conveyor roller tube (10),
- an energy line (52) running from outside the conveyor roller tube (10) to the drive unit (20),
- a data line (51) running from outside the conveyor roller tube (10) to the drive unit (20),
**characterised in that** the data line (51) is designed as a bus line and is connected to the drive unit (20) in terms of signals via a bus interface (31) arranged in the conveyor roller tube (10),
wherein the motor-driven conveyor roller (50) comprises an electronic control unit (30),
- which is designed to derive a prognosis characteristic value for the remaining service life of the motor-driven conveyor roller (50) from data available at the bus interface (31), or
- which is designed to calculate and shift permissible limit values for mechanical or thermal operating data from data available at the bus interface (31), or
- which is designed to determine a configuration recommendation from data present at the bus interface (31) and to output the configuration recommendation to a user via a user interface, or
- which is designed to determine an operating data change to be made from data present at the bus interface (31) and is preferably further designed to control the drive unit (20) with the operating data change, or
- which is designed to control the drive unit (20) with first setpoint operating data and to determine an operating temperature of the conveyor roller (50) from data present at the bus interface (31) and to compare it with an upper and/or lower temperature limit value, in order to control the drive unit (20) with second setpoint operating data changed from the first setpoint operating data when the upper temperature limit value is exceeded or when the lower temperature limit value is undershot, which cause a lower temperature generation within the drive unit (20), in particular by reducing the speed and/or the torque of the drive unit (20), or
- which is signal-technically coupled to a presence sensor and is designed to receive a signal from the presence sensor which detects the presence or absence of a conveyed material in a region of a conveying path and to control the drive unit (20) as a function of the signal in such a way that a contact or a contact with a contact force above a predetermined contact force limit between a first conveyed material conveyed with the conveying roller (50) and a second conveyed material on the conveying path is avoided.

2. Motor-driven conveyor roller (50) according to claim 1,
**characterised in that** the bus interface (31) is designed to route data via the bus line (51) which describe
- mechanical actual operating data, in particular a rotational speed of the drive unit (20) and/or the conveyor roller tube (10), a rotational position of the drive unit (20) and/or the conveyor roller tube (10) and/or a torque of the drive unit (20),
- actual operating data in terms of time, in particular operating time and/or duty cycle, and/or
- actual thermal operating data, in particular a temperature characteristic value, a current through a coil of the drive unit (20) serving to calculate a temperature value,
wherein the bus interface (31) comprises electronic circuitry that appropriately recognizes and processes such data or, in the case of dispatch, appropriately processes such data.

3. Motor-driven conveyor roller (50) according to claim 1 or 2,
**characterised in that** the bus interface (31) is designed to route and/or receive configuration data via the bus line (51), which configuration data
- comprise a characteristic value characterising a design of a transmission (22) included in the drive unit (20),
- comprise a characteristic value characterising a reduction ratio of a transmission (22) included in the drive unit (20),
- a characteristic value characterising a type of an electric motor (21) incorporated in the drive unit (20),
- comprise a characteristic value characterising a nominal power of a motor (21) included in the drive unit (20),
- comprise a characteristic value characterising an outer diameter of the conveyor roller tube (10),
- comprise a characteristic value characterising a length of the conveyor roller tube (10),
- comprise a characteristic value characterising an outer coating of the conveyor roller tube (10),
- comprise a characteristic value characterising a functional module, such as a signal decoder or a brake module, arranged in the conveyor roller tube (10),
- a characteristic value characterising a production feature of the conveyor roller (50), in particular a production date, a serial number and/or data describing quality controls carried out in the production process of the conveyor roller (50),
wherein the motor-driven conveyor roller (50) receives such data via the bus line (51) as part of its production and stores it in a permanent memory (32) within the conveyor roller tube (10).

4. Motor-driven conveyor roller (50) according to any of the preceding claims, **characterised in that** a temperature sensor (33) is arranged inside the conveyor roller tube (10), in particular in a winding of an electric motor (21) included in the drive unit (20), and the measurement data of the temperature sensor (33) are transmitted to the bus interface (31).

5. Motor-driven conveyor roller (50) according to any of the preceding claims,
**characterised in that** an acceleration sensor (34), an acoustic sensor (35) and/or a strain sensor is arranged inside the conveyor roller tube (10).
and the measurement data of the acceleration sensor (34), the acoustic sensor (35) or the strain sensor are transmitted to the bus interface (31).

6. Motor-driven conveyor roller (50) according to any of the preceding claims,
**characterised in that** a detector is arranged inside the conveyor roller tube (10), which is designed to detect a property of a conveyed material resting on the conveyor roller tube (10), and **in that** the data of the detector are transmitted to the bus interface (31).

7. Motor-driven conveyor roller (50) according to the preceding claim,
**characterised in that** the electronic control unit (30) is adapted to generate and transmit a signal to a user interface upon derivation of a prognosis parameter characterising a fall below a predetermined remaining life limit.

8. Motor-driven conveyor roller (50) according to claim 7,
**characterised in that** the electronic control unit (30) is designed to reduce a limit value for a permissible temperature, a permissible torque or a permissible speed when the signal is generated and to control the drive unit (20) with a set value which is below the reduced limit value.

9. Motor-driven conveyor roller (50) according to any of the preceding claims, **characterised in that** the electronic control unit (30) is arranged within the conveyor roller tube (10).

10. Motor-driven conveyor roller (50) according to any of the preceding claims, **characterised in that** the electronic control unit (30) is signal-connected to the bus interface (31) by means of the bus line (51) and is arranged outside the conveyor roller tube (10).

11. Motor-driven conveyor roller (50) according to any of the preceding claims, **characterised in that** the electronic control unit (30) has a first control circuit, which is arranged inside the conveyor roller tube (10) and is designed to carry out one or more of the functions of the control unit (30), and has a second control circuit, which is signal-connected to the bus interface (31) by means of the bus line (51), is arranged outside the conveyor roller tube (10) and is designed to carry out one or more of the functions of the control unit (30).

12. motor-driven conveyor roller (50) according to any of the preceding claims, **characterised by** an electronic memory unit (32) arranged in the conveyor roller tube (10), which is designed to store data present at the bus interface (31).

13. A motor-driven conveyor roller (50) according to the preceding claim 12, **characterised in that** the electronic memory unit (32) is designed to store sensor data, in particular sensor data detected by a sensor according to claim 5, and preferably to assign it to a date.

14. Motor-driven conveyor roller according to any of the preceding claims, **characterised in that** the bus interface (31) is designed to receive mechanical operating data via the bus line (51), in particular a setpoint speed of the drive unit (20) and/or of the conveyor roller tube (10), a setpoint rotational position of the drive unit (20) and/or of the conveyor roller tube (10) and/or a setpoint torque of the drive unit (20).

15. Motor-driven conveyor roller (50) according to any of the preceding claims, **characterised in that** the drive unit (20) comprises a brushless electric motor (21) and the motor electronics are arranged within the conveyor roller tube (10) and are adapted to receive target operating data via the bus line (51).

16. Motor-driven conveyor roller (50) according to any of the preceding claims, **characterised in that** the drive unit (20) comprises a brushless electric motor (21) and the motor electronics are arranged outside the conveyor roller tube (10) and are designed to receive data on the rotational angle position and/or rotational speed of the electric motor (21) required for controlling the electric motor (21) via the bus line (51).

17. Method of operating a motor-driven conveyor roller (50) according to any one of the preceding claims, comprising the steps:
- driving a conveyor roller tube (10), which is rotatably mounted about an axle element (15, 16), by means of a drive unit (20) arranged within the conveyor roller tube (10), which drive unit (20) is designed for torque generation and rotational movement between the axle element (15, 16) and the conveyor roller tube (10) and is mechanically coupled to the axle element (15, 16) and the conveyor roller tube (10),
- supplying energy to the drive unit (20) via an energy line (52) running from outside the conveyor roller tube (10) to the drive unit (20),
- controlling the drive unit (20) via a data line (51) running from outside the conveyor roller tube (10) to the drive unit (20),
**characterised in that** the data line (51) is designed as a bus line (51) and control signals are sent to the drive unit (20) via a bus interface (31) arranged in the conveyor roller tube (10).

## Revendications

1. Rouleau de transport motorisé (50), comprenant:
- un tube de rouleau de transport (10) qui est monté rotatif autour d'un élément d'axe (15, 16),
- une unité d'entraînement (20) disposée à l'intérieur du tube de rouleau de transport (10), laquelle est réalisée pour une production de couple et un mouvement de rotation entre l'élément d'axe (15, 16) et le tube de rouleau de transport (10) et est accouplée mécaniquement à l'élément d'axe (15, 16) et au tube de rouleau de transport (10),
- une ligne d'énergie (52) s'étendant à partir de l'extérieur du tube de rouleau de transport (10) jusqu'à l'unité d'entraînement (20),
- une ligne de données (51) s'étendant à partir de l'extérieur du tube de rouleau de transport (10) jusqu'à l'unité d'entraînement (20),
**caractérisé en ce que** la ligne de donnée (51) est réalisée sous forme de ligne de bus et est connectée par une technique de signalisation à l'unité d'entraînement (20) par le biais d'une interface de bus (31) disposée dans le tube de rouleau de transport (10),
le rouleau de transport motorisé (50) comprenant une unité de commande électronique (30)
- qui est réalisée pour déduire une valeur caractéristique de prévision pour la durée de vie restante du rouleau de transport motorisé (50) à partir des données présentes au niveau de l'interface de bus (31), ou
- qui est réalisée pour calculer ou pour décaler des valeurs limite admissibles pour des données de fonctionnement mécaniques ou thermiques à partir des données présentes au niveau de l'interface de bus (31), ou
- qui est réalisée pour déterminer une recommandation de configuration et pour délivrer la recommandation de configuration à un utilisateur par le biais d'une interface d'utilisateur à partir des données présentes au niveau de l'interface de bus (31), ou
- qui est réalisée pour déterminer une modification de données de fonctionnement devant être effectuée à partir des données présentes au niveau de l'interface de bus (31) et est de préférence en outre réalisée pour commander l'unité d'entraînement (20) à l'aide de la modification de données de fonctionnement, ou
- qui est réalisée pour commander l'unité d'entraînement (20) à l'aide de premières données de fonctionnement de consigne et pour déterminer une température de fonctionnement du rouleau de transport (50) à partir de données présentes au niveau de l'interface de bus (31) et pour comparer cette température de fonctionnement à une valeur limite de température supérieure et/ou inférieure et **en ce que** l'unité de commande (30) est en outre réalisée pour, en cas de dépassement de la valeur limite de température supérieure ou en cas de passage en dessous de la valeur limite de température inférieure, commander l'unité d'entraînement (20) à l'aide de deuxièmes données de fonctionnement de consigne, modifiées par rapport aux premières, lesquelles provoquent une production de température inférieure à l'intérieur de l'unité d'entraînement (20), en particulier par le fait que la vitesse de rotation et/ou le couple de l'unité d'entraînement (20) sont réduits, ou
- qui est accouplée par une technique de signalisation à un capteur de présence et est réalisée pour recevoir un signal du capteur de présence qui détecte la présence ou l'absence d'un produit à transporter dans une région d'une voie de transport et pour commander l'unité d'entraînement (20) en fonction du signal, de sorte qu'un contact ou un contact avec une force de contact supérieure à une limite de force de contact prédéfinie entre un premier produit à transporter transporté à l'aide du rouleau de transport (50) et un deuxième produit à transporter sur la voie de transport soit évité.

2. Rouleau de transport motorisé (50) selon la revendication 1, **caractérisé en ce que** l'interface de bus (31) est réalisée pour acheminer des données par le biais de la ligne de bus (51), lesquelles
- décrivent des données de fonctionnement réelles mécaniques, en particulier une vitesse de rotation de l'unité d'entraînement (20) et/ou du tube de rouleau de transport (10), une position de rotation de l'unité d'entraînement (20) et/ou du tube de rouleau de transport (10) et/ou un couple de l'unité d'entraînement (20),
- des données de fonctionnement réelles temporelles, en particulier la durée de fonctionnement et/ou la durée de marche, et/ou
- des données de fonctionnement réelles thermiques, en particulier une valeur caractéristique de température, un courant, servant au calcul d'une valeur de température, à travers une bobine de l'unité d'entraînement (20), l'interface de bus (31) comprenant des circuits électroniques qui détectent et traitent de manière correspondante de telles données ou les retraitent de manière correspondante dans le cas d'un envoi.

3. Rouleau de transport motorisé (50) selon la revendication 1 ou 2, **caractérisé en ce que** l'interface de bus (31) est réalisée pour acheminer et/ou pour recevoir des données de configuration par le biais de la ligne de bus (51), lesquelles données de configuration
- comprennent une valeur caractéristique qui caractérise le type d'une transmission (22) comprise dans l'unité d'entraînement (20),
- comprennent une valeur caractéristique qui caractérise un rapport de démultiplication d'une transmission (22) comprise dans l'unité d'entraînement (20),
- comprennent une valeur caractéristique qui caractérise le type d'un moteur électrique (21) compris dans l'unité d'entraînement (20),
- comprennent une valeur caractéristique qui caractérise une puissance nominale d'un moteur (21) compris dans l'unité d'entraînement (20),
- comprennent une valeur caractéristique qui caractérise un diamètre extérieur du tube de rouleau de transport (10),
- comprennent une valeur caractéristique qui caractérise une longueur du tube de rouleau de transport (10),
- comprennent une valeur caractéristique qui caractérise un revêtement extérieur du tube de rouleau de transport (10),
- comprennent une valeur caractéristique qui caractérise un module fonctionnel disposé dans le tube de rouleau de transport (10), par exemple un décodeur de signaux ou un module de freinage,
- comprennent une valeur caractéristique qui caractérise une caractéristique de production du rouleau de transport (50), en particulier une date de production, un numéro de série et/ou des données qui décrivent des contrôles de qualité effectués lors du processus de production du rouleau de transport (50),
le rouleau de transport motorisé (50) recevant de telles données par le biais de la ligne de bus (51) dans le cadre de sa production et les stockant dans une mémoire permanente (32) à l'intérieur du tube de rouleau de transport (10).

4. Rouleau de transport motorisé (50) selon l'une des revendications précédentes, **caractérisé en ce qu'**un capteur de température (33) est disposé à l'intérieur du tube de rouleau de transport (10), en particulier dans un enroulement d'un moteur électrique (21) compris dans l'unité d'entraînement (20) et les données de mesures du capteur de température (33) sont acheminés à l'interface de bus (31).

5. Rouleau de transport motorisé (50) selon l'une des revendications précédentes, **caractérisé en ce qu'**un capteur d'accélération (34), un capteur acoustique (35) et/ou un capteur de contrainte sont disposés à l'intérieur du tube de rouleau de transport (10) et les données de mesures du capteur d'accélération (34), du capteur acoustique (35) ou du capteur de contrainte sont acheminées à l'interface de bus (31).

6. Rouleau de transport motorisé (50) selon l'une des revendications précédentes, **caractérisé en ce qu'**un détecteur est disposé à l'intérieur du tube de rouleau de transport (10), lequel détecteur est réalisé pour détecter une propriété d'un produit à transporter reposant sur le tube de rouleau de transport (10) et **en ce que** les données du détecteur sont acheminées à l'interface de bus (31).

7. Rouleau de transport motorisé (50) selon l'une des revendications précédentes, **caractérisé en ce que** l'unité de commande électronique (30) est réalisée pour, en cas de détection d'une valeur caractéristique de prévision qui caractérise le passage en dessous d'une valeur limite de durée de vie restante prédéfinie, produire un signal et le transmettre à une interface d'utilisateur.

8. Rouleau de transport motorisé (50) selon la revendication 7, **caractérisé en ce que** l'unité de commande électronique (30) est réalisée pour, en cas de production du signal, réduire une valeur limite pour une température admissible, un couple admissible ou une vitesse de rotation admissible et pour commander l'unité d'entraînement (20) à l'aide d'une valeur de consigne qui est inférieure à la valeur limite réduite.

9. Rouleau de transport motorisé (50) selon l'une des revendications précédentes,
**caractérisé en ce que** l'unité de commande électronique (30) est disposée à l'intérieur du tube de rouleau de transport (10).

10. Rouleau de transport motorisé (50) selon l'une des revendications précédentes,
**caractérisé en ce que** l'unité de commande électronique (30) est connectée par une technique de signalisation à l'interface de bus (31) au moyen de la ligne de bus (51) et est disposée à l'extérieur du tube de rouleau de transport (10).

11. Rouleau de transport motorisé (50) selon l'une des revendications précédentes,
**caractérisé en ce que** l'unité de commande électronique (30) comporte un premier circuit de commande qui est disposé à l'intérieur du tube de rouleau de transport (10) et est réalisé pour effectuer une ou plusieurs des fonctions de l'unité de commande (30) et comporte un deuxième circuit de commande qui est connecté par une technique de signalisation à l'interface de bus (31) au moyen de la ligne de bus (51), est disposé à l'extérieur du tube de rouleau de transport (10) et est réalisé pour effectuer une ou plusieurs des fonctions de l'unité de commande (30).

12. Rouleau de transport motorisé (50) selon l'une des revendications précédentes,
**caractérisé par** une unité de mémoire électronique (32) disposée dans le tube de rouleau de transport (10), laquelle unité de mémoire est réalisée pour mémoriser des données présentes au niveau de l'interface de bus (31).

13. Rouleau de transport motorisé (50) selon la revendication 12 précédente, **caractérisé en ce que** l'unité de mémoire électronique (32) est réalisée pour mémoriser des données de capteur, en particulier des données de capteur détectées par un capteur selon la revendication 5 et pour les associer de préférence à une date.

14. Rouleau de transport motorisé (50) selon l'une des revendications précédentes,
**caractérisé en ce que** l'interface de bus (31) est réalisée pour recevoir des données de fonctionnement mécaniques par le biais de la ligne de bus (51), en particulier une vitesse de rotation de consigne de l'unité d'entraînement (20) et/ou du tube de rouleau de transport (10), une position de rotation de consigne de l'unité d'entraînement (20) et/ou du tube de rouleau de transport (10) et/ou un couple de consigne de l'unité d'entraînement (20).

15. Rouleau de transport motorisé (50) selon l'une des revendications précédentes,
**caractérisé en ce que** l'unité d'entraînement (20) comprend un moteur électrique (21) sans balais et l'électronique de moteur est disposée à l'intérieur du tube de rouleau de transport (10) et est réalisée pour recevoir des données de fonctionnement de consigne par le biais de la ligne de bus (51).

16. Rouleau de transport motorisé (50) selon l'une des revendications précédentes,
**caractérisé en ce que** l'unité d'entraînement (20) comprend un moteur électrique (21) sans balais et l'électronique de moteur est disposée à l'extérieur du tube de rouleau de transport (10) et est réalisée pour recevoir par le biais de la ligne de bus (51) des données nécessaires pour la commande du moteur électrique (21) et se rapportant à la position angulaire de rotation et/ou à la vitesse de rotation du moteur électrique (21).

17. Procédé de fonctionnement d'un rouleau de transport motorisé (50) selon l'une des revendications précédentes, comportant les étapes suivantes:
- entraînement d'un tube de rouleau de transport (10) qui est monté rotatif autour d'un élément d'axe (15, 16), au moyen d'une unité d'entraînement (20) disposée à l'intérieur du tube de rouleau de transport (10), laquelle est réalisée pour une production de couple et un mouvement de rotation entre l'élément d'axe (15, 16) et le tube de rouleau de transport (10) et est accouplée mécaniquement à l'élément d'axe (15, 16) et au tube de rouleau de transport (10),
- apport d'énergie à l'unité d'entraînement (20) par le biais d'une ligne d'énergie (52) s'étendant à partir de l'extérieur du tube de rouleau de transport (10) jusqu'à l'unité d'entraînement (20),
- commande de l'unité d'entraînement (20) par le biais d'une ligne de données (51) s'étendant à partir de l'extérieur du tube de rouleau de transport (10) jusqu'à l'unité d'entraînement (20),
**caractérisé en ce que** la ligne de donnée (51) est réalisée sous forme de ligne de bus (51) et des signaux de commande sont envoyés à l'unité d'entraînement (20) par le biais d'une interface de bus (31) disposée dans le tube de rouleau de transport (10).
